# EUROPÄISCHE PATENTSCHRIFT

(11) **EP 4 259 300 B1**
(45) Veröffentlichungstag und Bekanntmachung des Hinweises auf die Patenterteilung: **25.06.2025**
(21) Anmeldenummer: 21836422.2
(22) Anmeldetag: 09.12.2021
(51) Int. Cl.: B01D 17/00

(54) **FILTEREINHEIT UND BODENEINHEIT EINER ÖL/WASSER-TRENNVORRICHTUNG ZUM ENTFERNEN ÖLHALTIGER BESTANDTEILE AUS EINEM ÖL/WASSER-GEMISCH**
FILTER UNIT AND BASE UNIT OF AN OIL-WATER-SEPARATING DEVICE FOR REMOVING OIL-CONTAINING CONSTITUENTS FROM AN OIL-WATER MIXTURE
UNITÉ DE FILTRE ET UNITÉ DE BASE D'UN DISPOSITIF DE SÉPARATION HUILE-EAU POUR ÉLIMINER DES CONSTITUANTS CONTENANT DE L'HUILE D'UN MÉLANGE HUILE-EAU

(30) Priorität: 11.12.2020 DE 102020133106
(43) Veröffentlichungstag der Anmeldung: 18.10.2023
(73) Patentinhaber: Beko Technologies GmbH, 41468 Neuss (DE)
(72) Erfinder: ROTTER, Karsten, 41325 Korschenbroich (DE); RUNDE, Marcel, 50931 Köln (DE); SINSTEDTEN, Johannes, 41352 Korschenbroich (DE); WEIDENHAUSE, Sascha, 41468 Münster (DE); TILLMANNS, Henning, 48357 Nordwalde (DE)
(74) Vertreter: Patentanwälte Bauer Vorberg Kayser
(86) Internationale Anmeldenummer: PCT/EP2021/085029
(87) Internationale Veröffentlichungsnummer: WO 2022/122940

(56) Entgegenhaltungen:
- DE-U1- 202008 004 291
- US-A- 5 651 887
- US-A1- 2005 035 042

## Beschreibung

Die Erfindung betrifft eine Filtereinheit zur Integration in eine Öl/Wasser-Trennvorrichtung zum Entfernen ölhaltiger Bestandteile aus einem Öl/Wasser-Gemisch mit den Merkmalen des Oberbegriffs von Anspruch 1. Ferner betrifft die Erfindung eine Bodeneinheit einer Öl/Wasser-Trennvorrichtung mit den Merkmalen des Oberbegriffs von Anspruch 13, sowie eine Öl/Wasser-Trennvorrichtung mit den Merkmalen des Oberbegriffs von Anspruch 20.

Ein Anwendungsgebiet, für das insbesondere auch die vorliegende Erfindung vorgesehen ist, ist die Reinigung von Kondensat aus Druckluftprozessen. Demnach betrifft die vorliegende Erfindung insbesondere eine Filtereinheit zur Integration in eine Öl/Wasser-Trennvorrichtung zum Entfernen ölhaltiger Bestandteile aus einem Öl/Wasser-Gemisch in Form von Kondensat aus einem Druckluftprozess. Solche Öl/Wasser- Trennvorrichtungen (bzw. auch Öl-/Wasser-Trenner genannt) können auch als Kondensattrenner bezeichnet werden.

Öl/Wasser-Trennvorrichtungen kommen oftmals in Verbindung mit Druckluftkompressoren zu Einsatz, da beim Erzeugen von Druckluft die in der Umgebungsluft enthaltene Luftfeuchtigkeit durch das Ansaugen und Komprimieren von Umgebungsluft physikalisch bedingt sowie durch Trocknung der Druckluft als Kondensat anfällt. Dieses Kondensat stellt als Öl/Wasser-Gemisch ein Abwasser dar, das meist, u.a. wegen des Eintrags von Schmiermitteln des Druckluftkompressors, nicht in den öffentlichen Abwasserkanal eingeleitet werden darf, weil es mit Öl und Schmutzpartikeln belastet ist und beispielsweise die Grenzwerte an Kohlenwasserstoffkonzentration übersteigt. Das verunreinigende Öl kann dabei aus der Schmierung des Kompressors stammen oder als Öldampf aus der Umgebung angesaugt werden. Schmutzpartikel können beispielsweise Abrieb des Kompressors sein oder ebenfalls aus der Umgebung stammen (z.B. in Form von Pollen).

Bei einem Volumenstrom von 60 m³/h angesaugter Luft kann typischerweise ein meist diskontinuierlicher Kondensatstrom von 1,23 L/h entstehen, der mit 240 mg/h Öl beladen ist. Dies entspricht 195 mg Öl pro Liter an Kondensat. In Abhängigkeit von verschiedenen Parametern können diese Werte schwanken, wobei zu diesen Parametern beispielsweise die klimatischen Bedingungen (Umgebungstemperatur und -feuchte), die im Kompressor verwendeten Ölsorte und die Bau- und Betriebsweise des Kompressors zählen können. Auch die Bindung zwischen Wasser und Schmiermittel ist unterschiedlich und reicht von einem Gemisch von Öl und Wasser, über eine Dispersion bis hin zu einer Emulsion. Zulässige Werte für die Einleitung in den Schmutzwasserkanal liegen jedoch in der Größenordnung von 10-20 mg/L, teilweise sogar bei 5 mg/L (Öl/Kondensat). Es entsteht somit ein durch Abfallentsorgungsunternehmen zu entsorgender Sondermüll, obwohl es sich zu über 99,5 % um Wasser aus der Feuchte der Umgebungsluft handelt.

Das Kondensat muss also grundsätzlich fachgerecht entsorgt werden, wobei der Restölgehalt in diesem Öl-/Wasser-Gemisch dabei auf die, insbesondere länderspezifisch, reglementierten Grenzwerte reduziert werden muss. Das Öl-/WasserGemisch soll als zu reinigende Flüssigkeit in eine gereinigte Flüssigkeit in Form von in die Kanalisation einleitfähigem Abwasser umgewandelt werden. Daher muss das Öl aus dem Wasser weitgehend entfernt werden.

Zur Aufbereitung eines solchen Kondensats ist es zu diesem Zweck bekannt, Öl/Wasser-Trennvorrichtungen einzusetzen, welche die Ölanteile kostengünstig aus der zu reinigenden Flüssigkeit entfernen können. Bekannte Apparate dieser Bauart arbeiten regelmäßig mit mehreren Abscheidestufen, um die gewünschte Reinheit des Wassers zu erzielen. Dabei wird das Kondensat typischerweise über ein Druckentlastungselement langsam und damit turbulenzarm in einen Vorabscheider eingeleitet. Dieser arbeitet nach dem Prinzip der Schwerkrafttrennung und sorgt für das Absetzen schwerer, sedimentartiger Verunreinigungen (Dichte größer 1 kg/dm³) und das Aufschwimmen freier Ölanteile (Dichte kleiner 1 kg/dm³). Diese Ölanteile fließen dann einem Auffangbehälter zu. In einer zweiten Stufe werden aus dem Kondensat durch einen Filter, beispielsweise einen Adsorptionsfilter mit Adsorptionsfiltermaterial, vor allem feine Öltröpfchen abgetrennt, wobei das Filtermaterial oftmals auf einem oleophilen Material, sowie Aktivkohle mit einer sehr großen inneren Oberfläche basieren. Das Adsorptionsfiltermaterial ist also zur Adsorption von dispergiertem Öl eingerichtet.

Aus der DE 10 2006 009 542 A1 ist beispielsweise grundsätzlich eine Öl/Wasser-Trennvorrichtung bekannt, bei welcher die zu reinigende Flüssigkeit in Form von Kondensat mitsamt den freien Ölanteilen durch einen Adsorptionsfilter mit Adsorptionsfiltermaterial geführt wird. Der Aufbau dieser Öl/Wasser-Trennvorrichtung funktioniert nach dem Prinzip kommunizierender Röhren, wobei in dem Maß, in dem neues Kondensat zufließt, aufbereitetes Kondensat den Apparat am Reinwasseraustritt zum Abwasserkanal hin verlässt.

Darüber hinaus sind weitere Öl/Wasser-Trennvorrichtungen aus der DE 10 2015 112 092 A1 und aus der DE 10 2017 106 848 A1 bekannt, wobei die Öl/Wasser-Trennvorrichtung gemäß DE 10 2015 112 092 A1 in Kombination mit Druckbeaufschlagung durch Druckluft und die Öl/Wasser-Trennvorrichtung gemäß DE 10 2017 106 848 A1 in Kombination mit statischer Druckbeaufschlagung betrieben wird.

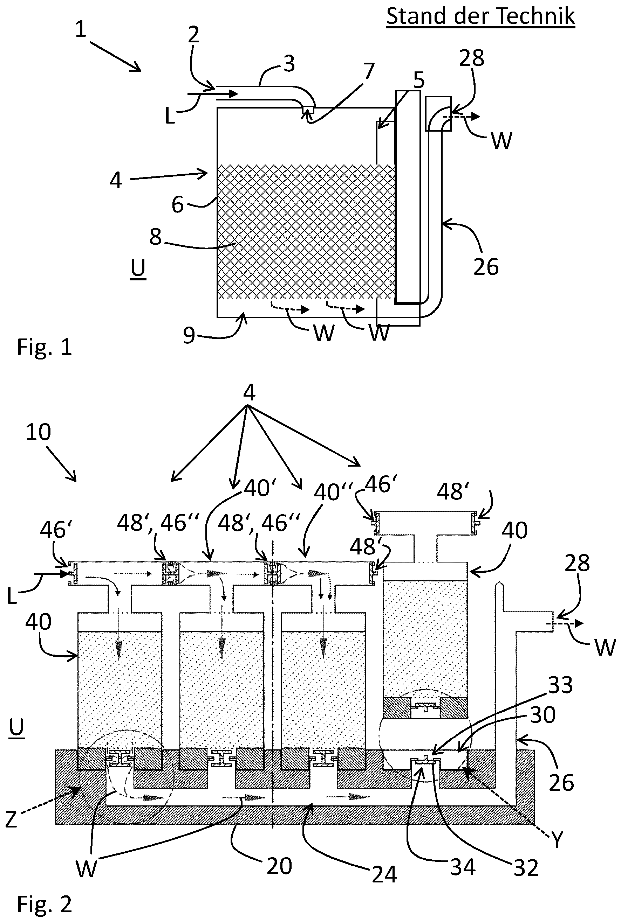

In Fig. 1 ist eine prinzipielle Öl/Wasser-Trennvorrichtung 1 gemäß Stand der Technik schematisch dargestellt. Die Öl/Wasser-Trennvorrichtung 1 ist zum Entfernen ölhaltiger Bestandteile aus einem Öl/Wasser-Gemisch eingerichtet. Die zu reinigende Flüssigkeit L in Form des Öl/Wasser-Gemischs tritt dabei initial in die Öl/Wasser-Trennvorrichtung 1 ein, indem sie oberseitig bzw. kopfseitig durch eine Eingangsöffnung 2 eingeleitet wird. Sodann wird die zu reinigende Flüssigkeit L über einen Zulaufkanal 3 weitergeleitet und schließlich einer Filtereinheit 4 zugeführt. Dabei wird die zu reinigende Flüssigkeit L in einen Filterinnenraum 5 eingeleitet, welcher mittels eines Gehäuses 6 von der Umgebung U getrennt ist. Die zu reinigende Flüssigkeit L fließt konkret über die Zulauföffnung 7 in den Filterinnenraum 5, wo sie auf Filtermaterial, vorliegend auf Adsorptionsfiltermaterial 8 zur Adsorption von dispergiertem Öl, trifft. Unterseitig bzw. bodenseitig weist die Öl/Wasser-Trennvorrichtung 1 einen Sammelraum bzw. eine Sammelleitung 9 auf, der bzw. die stromabwärts des Adsorptionsfiltermaterial 8 die gereinigte Flüssigkeit W (gestrichelter Pfeil) aufnimmt und sammelt. Von der Sammelleitung 9 gelangt die gereinigte Flüssigkeit W weiter zu einer Steigleitung 26, von der aus die von den ölhaltigen Bestandteilen gereinigte Flüssigkeit W schließlich über einen Auslass 28 abgeleitet, und somit beispielsweise als einleitfähiges Wasser der Kanalisation zugeführt, werden kann. Die dargestellte Öl/Wasser-Trennvorrichtung 1 arbeitet nach dem hydrostatischen Prinzip kommunizierender Röhren.

Aus DE 20 2008 004 291 U1 ist ein auswechselbarer Flüssigkeitsfilter mit Verschließeinrichtung bekannt, wobei der Flüssigkeitsfilter als Ölfilter für eine Brennkraftmaschine dienen soll.

Aus US 5,651,887 A ist eine andere Art von Filter bekannt, nämlich ein Filter und eine Halterung für Getränkeautomaten und automatische Getränkebrühmaschinen.

Aus US 2005/0035042 A1 ist eine Kartusche zur Filterung von Wasser bekannt.

Die vorliegende Erfindung ist dabei nicht auf das hydrostatische Prinzip beschränkt. Vielmehr sind die Erkenntnisse der vorliegenden Erfindung flexibel einsetzbar, indem die später im Detail beschriebene, vorschlagsgemäße Filtereinheit sowie die vorschlagsgemäße Öl/Wasser-Trennvorrichtung in Systeme eingebunden sein können, bei denen ein direkter Anschluss der vorschlagsgemäßen Filtereinheit an eine Kondensatleitung, beispielsweise ohne Druckentlastung, erfolgt. Ferner ist eine Verwendung auch in Kombination mit einer Druckbeaufschlagung, etwa durch Druckluft, möglich. Des Weiteren kann die Erfindung selbstverständlich auch bei dem in Fig. 1 dargestellten Fall einer statischen Druckbeaufschlagung eingesetzt werden. Ebenso sind weitere Anwendungen denkbar, beispielsweise auch ein Betrieb mit einer Druckentlastungskammer.

Der Stand der Technik ist dahingehend verbesserungswürdig, dass die Leistung der Filtersysteme auch über eine längere Betriebsdauer des Gesamtsystems trotz auftretender Verschmutzung bzw. zunehmender Sättigung des Filtermaterials aufrechterhalten werden soll. So kann der Durchflusswiderstand der Filtereinheiten prinzipiell bei Kondensattrennern durch Verschmutzungen und Sättigungen im Laufe des Betriebes ansteigen. Der Anstieg des Durchflusswiderstandes kann bereits eintreten, bevor die Aufnahmefähigkeit des Filtermaterials für Öl ausgeschöpft ist. Aus diesem Grund muss die Filtereinheit regelmäßig gewechselt werden. Ein solcher Filterwechsel ist bei den bekannten Systemen sehr aufwendig. So tritt beispielsweise das Problem auf, dass Filtereinheiten aus dem eigentlich geschlossenen Sammelraum herausgeholt werden müssen. Dabei muss häufig das in dem Sammelraum vor dem Filterinnenraum befindliche und zu reinigende Kondensat aufgefangen werden und regelmäßig separat entfernt werden. Außerdem muss der Sammelraum selbst aufwendig gereinigt werden, um etwa eine schnelle Belegung neu eingesetzter Filtereinheiten mit Partikeln und sogenannten Fouling-Stoffen zu vermeiden. Selbst wenn ein Filtersystem simpler austauschbar ausgebildet ist, kann das Problem auftreten, dass das Gesamtsystem angehalten, also der Filtrationsvorgang zwischenzeitlich gestoppt, werden muss, um die Filtereinheiten auszutauschen.

Des Weiteren geht der Eingriff in das geschlossene Leitungssystem der Öl/Wasser-Trennvorrichtung meist mit einer erhöhten Verschmutzungsgefahr einher. So treten beim Filterwechsel häufig Restmengen von Kondensat oder Verschmutzungen aus den Ablauföffnungen der Filtereinheiten aus und verschmutzen die Gesamtanlage. Auch die angeschlossenen Rohre bzw. Schläuche und insbesondere auch die Verbindungsstellen sind nur aufwendig zu reinigen.

Schließlich ist ein weiteres Problem, dass die bekannten Systeme bei einer variabel zugeführten Kondensatmenge nicht in ihrer Leistung oder Kapazität an die gegebenen Rahmenbedingungen, wie etwa den Kondensatanfall oder den Verschmutzungsgrad der zu reinigenden Flüssigkeit, angepasst werden können.

Ausgehend hiervon besteht die Aufgabe der Erfindung daher darin, die bekannte Filtereinheit so weiterzuentwickeln und zu verbessern, dass ein einfacher und sauberer Filterwechsel ermöglicht wird. Weiterhin ist es eine Aufgabe der Erfindung, eine Öl/Wasser-Trennvorrichtung sowie eine Bodeneinheit für eine Öl/Wasser-Trennvorrichtung bereitzustellen, bei welcher ein einfacher und sauberer Filterwechsel gewährleistet werden kann. Insbesondere soll möglichst flexibel, einerseits auf die Verschmutzung einer Filtereinheit, andererseits auch auf eine variierende Auslastung des Gesamtsystems, etwa durch Variation der Kondensatmenge bzw. Verschmutzung des zugeführten Kondensats, reagiert werden können.

Diese Aufgabe wird bezüglich einer Filtereinheit mit den Merkmalen des Oberbegriffs von Anspruch 1 durch die Merkmale des kennzeichnenden Teils von Anspruch 1 gelöst. Ferner wird die Aufgabe bezüglich einer Bodeneinheit durch die Bodeneinheit mit den Merkmalen des Anspruchs 13, sowie bezüglich einer Öl/Wasser-Trennvorrichtung mit den Merkmalen des Anspruchs 20 gelöst.

Es ist darauf hinzuweisen, dass die in den Ansprüchen einzeln aufgeführten Merkmale in beliebiger, technisch sinnvoller Weise miteinander, auch über die Grenzen der nebengeordneten unabhängigen Ansprüche hinweg, kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Wesentlich für die Erfindung ist die Erkenntnis, dass austauschbare und einfach handzuhabende Filterkartuschen bereitgestellt werden, die mit einer Bodeneinheit einer Öl-/Wasser-Trennvorrichtung auf simple Weise zusammenwirken und vor allem ohne besondere zusätzliche Handgriffe installiert und demontiert werden können. Das System aus Bodeneinheit mit Filteraufnahmen für die Filterkartuschen und Filterkartuschen selbst kann dabei in vorteilhafter Weise aufeinander abgestimmt sein. So zeichnen sich die vorschlagsgemäßen Filtereinheiten gerade dadurch aus, dass die Ablauföffnungen über den jeweiligen automatischen Filterkartuschen-Verschluss ganz automatisch, also insbesondere ohne eigens erforderliche Handgriffe, geöffnet werden können. Konkret wird durch das Einsetzen einer Filterkartusche in eine korrespondierende Filteraufnahme einer Bodeneinheit bereits dafür gesorgt, dass der automatische Filterkartuschen-Verschluss von seinem verschlossenen Zustand in den geöffneten Zustand wechselt, ohne dass es beispielsweise eines aktiven Öffnens des Filterkartuschen-Verschlusses durch den Anwender bedürfte. Die vorschlagsgemäße Bodeneinheit wiederum ist vorteilhaft mit der Filteraufnahme für anzuschließende Filtereinheiten ausgebildet, wobei diese Filteraufnahme gerade den Verknüpfungspunkt zwischen der stromaufwärts vorgesehenen Filtereinheit und der an diese Filtereinheiten anschließenden Sammelleitung zum Sammeln bzw. Weiterleiten der gereinigten Flüssigkeit darstellt. Die Schnittstelle stellt letztlich die Eingangsöffnung in die Bodeneinheit dar, welche über den automatischen Sammler-Verschluss ganz automatisch, also insbesondere ohne eigens erforderliche Handgriffe, geöffnet werden kann. Konkret wird vorzugsweise durch das Einsetzen einer korrespondierenden Filtereinheit in die Filteraufnahme der vorschlagsgemäßen Bodeneinheit bereits dafür gesorgt, dass der automatische Sammler-Verschluss von seinem verschlossenen Zustand in den geöffneten Zustand wechselt, ohne dass es beispielsweise eines aktiven Öffnen des Sammler-Verschlusses durch den Anwender bedürfte.

Die vorschlagsgemäße Filtereinheit ist zur Integration in eine Öl/Wasser-Trennvorrichtung zum Entfernen ölhaltiger Bestandteile aus einem Öl/Wasser-Gemisch in Form von Kondensat aus einem Druckluftprozess, sowie auch zur erneuten Demontage von dieser Öl/Wasser-Trennvorrichtung eingerichtet. Dabei weist die vorschlagsgemäße Filtereinheit ein Gehäuse auf, welches einen Filterinnenraum von einer Umgebung trennt. In dem Filterinnenraum ist Filtermaterial zum wenigstens teilweise Entfernen von Öl aus dem Öl/Wasser-Gemisch in Form von Kondensat aus einem Druckluftprozess angeordnet. Vorzugsweise handelt es sich dabei um Adsorptionsfiltermaterial zur Adsorption von dispergiertem Öl. Ferner ist eine Zulauföffnung zum Bereitstellen eines Zulaufs von zu reinigender Flüssigkeit, vorschlagsgemäß Kondensat aus einem Druckluftprozess, in den Filterinnenraum vorgesehen. Schließlich weist das Gehäuse stromabwärts des Filtermaterials eine Ablauföffnung zum Bereitstellen eines Ablaufs von gereinigter Flüssigkeit, also etwa dem gereinigten und bestimmungsgemäß im Wesentlichen von Öl befreitem Kondensat, aus dem Filterinnenraum auf.

Vorschlagsgemäß ist die Filtereinheit als Filterkartusche zum lösbaren Anschließen an die und zur erneuten Demontage von der Öl/Wasser-Trennvorrichtung ausgebildet. Ferner ist vorschlagsgemäß vorgesehen, dass die Ablauföffnung des Gehäuses mittels eines automatischen Filterkartuschen-Verschlusses verschließbar eingerichtet ist, wobei, durch ein Einsetzen der Filterkartusche in eine korrespondierende Filteraufnahme einer Bodeneinheit der Öl/Wasser-Trennvorrichtung, der automatische Filterkartuschen-Verschluss derart von einem geschlossenen Zustand zum Verhindern des Ablaufs von gereinigter Flüssigkeit aus dem Filterinnenraum in einen geöffneten Zustand zum Ermöglichen des Ablaufs von gereinigter Flüssigkeit aus dem Filterinnenraum versetzbar ausgebildet ist, dass es keinem aktiven Öffnen des Filterkartuschen-Verschlusses durch einen Anwender bedarf.

Vorschlagsgemäß ist der automatische Filterkartuschen-Verschluss derart eingerichtet, dass eine Schließkraft, die auf eine dem Filterinnenraum zugewandte Innenseite des automatischen Filterkartuschen-Verschlusses gerichtet ist, den automatischen Filterkartuschen-Verschluss von dem geöffneten Zustand in den geschlossenen Zustand versetzt. Weiterhin ist vorschlagsgemäß vorgesehen, dass die in dem Filterinnenraum befindliche zu reinigende Flüssigkeit bzw. gereinigte Flüssigkeit die Schließkraft auf die Innenseite des automatischen Filterkartuschen-Verschlusses wenigstens teilweise ausübt.

Grundsätzlich kann der automatische Filterkartuschen-Verschluss sowohl den geschlossenen als auch den geöffneten Zustand einnehmen. Vorzugsweise kann die Filterkartusche somit mehrfach geöffnet und verschlossen werden, ohne dass Änderungen oder Ergänzungen an der Filterkartusche vorgenommen werden müssten. Vorzugsweise ist die Zulauföffnung einer Oberseite und die Ablauföffnung einer Unterseite der Filterkartusche zugeordnet. Weiter bevorzugt ist die Oberseite im Betrieb im Wesentlichen vertikal nach oben und die Unterseite im Betrieb im Wesentlichen vertikal nach unten gerichtet. Unter automatisch ist bezüglich des automatischen Filterkartuschen-Verschlusses vorliegend zu verstehen, dass keine eigenen Handgriffe etwa seitens des Anwenders notwendig sind, um den automatischen Filterkartuschen-Verschluss zu öffnen, bzw. vorzugsweise auch nicht, um den Filterkartuschen-Verschluss erneut zu verschließen. Ein wesentlicher Vorteil der vorschlagsgemäßen Filtereinheit ist, dass der Austausch von auszuwechselnden Filterkartuschen, beispielsweise aufgrund einer zu hohen Beladung des Adsorptionsfiltermaterials, auf einfache und vor allem saubere Weise erfolgen kann. So kann der automatische Filterkartuschen-Verschluss etwa bei der Demontage einer Filtereinheit aus einer Öl-/Wasser-Trennvorrichtung vorzugsweise dafür sorgen, dass die eigentlich den Ablauf nach außen freigebende Ablauföffnung der Filtereinheit automatisch verschlossen wird. Vorteilhaft kann somit der Wechsel tropffrei erfolgen, also im Wesentlichen ohne, dass Kondensat aus der Ablauföffnung austreten würde. In vorteilhafter Weise muss nur die jeweilige Filterkartusche ausgewechselt werden und nicht mehr etwa der gesamte Sammler. Auf diese Weise können Ressourcen geschont werden. Besonders vorteilhaft können die Filterkartuschen bezüglich Größe und Gewicht derart ausgebildet sein, dass sie einfach und ohne Hilfsmittel von einem Anwender, beispielsweise von einer Serviceperson, getragen und ausgetauscht werden können. Der Service wird dadurch erleichtert. Es handelt sich bei der vorgeschlagenen Filtereinheit um eine, vorzugsweise händisch, auswechselbare Filterkartusche.

Nach dem weiteren Aspekt der vorliegenden Erfindung ist eine Bodeneinheit einer Öl/Wasser-Trennvorrichtung zum Entfernen ölhaltiger Bestandteile aus einem Öl/Wasser-Gemisch aus Kondensat aus einem Druckluftprozess vorgeschlagen, wobei die vorschlagsgemäße Bodeneinheit eingangsseitig wenigstens eine Eingangsöffnung zum Einleiten von in einer vorgeschalteten, vorschlagsgemäßen Filtereinheit gereinigter, also etwa bereits in vorgegebenen Grenzen von Öl und Schmutzpartikeln gereinigte, Flüssigkeit aufweist. Ferner ist eine Sammelleitung zum Weiterleiten der gereinigten Flüssigkeit vorgesehen. Die Eingangsöffnung stellt dabei einen Zugang für die gereinigte Flüssigkeit in die Sammelleitung bereit. Schließlich ist auch noch eine Steigleitung vorgesehen, die mit der Sammelleitung in Fluidverbindung steht und zum Ableiten der gereinigten Flüssigkeit über eine stromabwärts vorgesehene Auslassöffnung, beispielsweise in die Kanalisation, eingerichtet ist.

Vorschlagsgemäß ist bei der Bodeneinheit wenigstens eine Filteraufnahme vorgesehen. Die Filteraufnahme ist dabei zum lösbaren Anschließen und zur erneuten Demontage der vorgeschalteten Filtereinheit in Form einer Filterkartusche, vorzugsweise einer vorschlagsgemäßen Filtereinheit, eingerichtet. Vorschlagsgemäß ist die Eingangsöffnung im Bereich der Filteraufnahme angeordnet und mittels eines automatischen Sammler-Verschlusses, der die Sammelleitung von einer Umgebung trennt, verschließbar eingerichtet. Der automatische Sammler-Verschluss ist vorschlagsgemäß von einem geschlossenen Zustand zum Verschließen einer Fluidverbindung zwischen der Sammelleitung und der Umgebung in einen geöffneten Zustand zum Ermöglichen des Einleitens der in der vorgeschalteten Filtereinheit gereinigten Flüssigkeit versetzbar ausgebildet.

Grundsätzlich kann der automatische Sammler-Verschluss sowohl den geschlossenen als auch den geöffneten Zustand einnehmen. Vorzugsweise kann die entsprechende Eingangsöffnung der Bodeneinheit somit mehrfach geöffnet und verschlossen werden, ohne dass Änderungen oder Ergänzungen an der Bodeneinheit vorgenommen werden müssten. Vorzugsweise ist die Eingangsöffnung einer Oberseite der Bodeneinheit zugeordnet und die Oberseite weiter bevorzugt im Betrieb im Wesentlichen vertikal nach oben gerichtet. Gegenüberliegend von der Oberseite und somit auch von dem Filteranschluss ist vorzugsweise die Unterseite der Bodeneinheit vorgesehen, auf welcher Unterseite insbesondere die Bodeneinheit auch im Betrieb steht. Unter automatisch ist bezüglich des automatischen Sammler-Verschlusses vorliegend zu verstehen, dass keine eigenen Handgriffe etwa seitens des Anwenders notwendig sind, um den automatischen Sammler-Verschluss zu öffnen, bzw. vorzugsweise auch nicht, um den Sammler-Verschluss erneut zu verschließen. Ein wesentlicher Vorteil der vorschlagsgemäßen Bodeneinheit ist, dass ein Wechsel von angeschlossenen Filterkartuschen, beispielsweise aufgrund einer zu hohen Beladung des Filtermaterials, auf einfache und vor allem saubere Weise erfolgen kann. So kann der automatische Sammler-Verschluss etwa bei der Demontage einer angeschlossenen Filtereinheit vorzugsweise dafür sorgen, dass die eigentlich eine Verbindung nach außen darstellende Eingangsöffnung der Bodeneinheit automatisch verschlossen wird. Vorteilhaft kann somit die Demontage einer Filterkartusche ohne Verschmutzen der Bodeneinheit und insbesondere ohne Austreten von bereits in der Sammelleitung befindlichem Kondensat erfolgen. Eine jede Eingangsöffnung der Bodeneinheit ist vorzugsweise so eingerichtet, dass sie durch den jeweiligen automatischen Sammler-Verschluss automatisch verschlossen ist, wenn keine Filterkartusche in der entsprechenden Filteraufnahme eingesetzt ist. In vorteilhafter Weise muss nur die jeweilige Filterkartusche ausgewechselt werden und nicht mehr etwa der gesamte Sammler oder die Bodeneinheit. Auf diese Weise können Ressourcen geschont werden.

Bei der bevorzugten Verwendung von der vorschlagsgemäßen Bodeneinheit mit vorschlagsgemäßen Filterkartuschen können die jeweiligen Filterkartuschen-Verschlüsse und Sammler-Verschlüsse zueinander korrespondierende Verschlüsse ausbilden. Eine bzw. mehrere Filterkartuschen können dabei in der jeweils korrespondierenden Filteraufnahme der Bodeneinheit stehen.

Nach dem weiteren Aspekt der vorliegenden Erfindung ist eine Öl/Wasser-Trennvorrichtung zum Entfernen ölhaltiger Bestandteile aus einem Öl/Wasser-Gemisch aus einem aus einem Druckluftprozess stammenden Kondensat vorgeschlagen. Die vorschlagsgemäße Öl/Wasser-Trennvorrichtung weist eine vorschlagsgemäße Bodeneinheit auf. Vorzugsweise ist weiter eine vorschlagsgemäße Filtereinheit in Form einer Filterkartusche vorgesehen. Weiter vorzugsweise korrespondiert die Filterkartusche derart mit der Filteraufnahme, dass, wenn die Filterkartusche in der Filteraufnahme aufgenommen ist, der automatische Filterkartuschen-Verschluss und der automatische Sammler-Verschluss derart aufeinander stoßen, dass dadurch sowohl der automatische Filterkartuschen-Verschluss als auch der automatische Sammler-Verschluss jeweils in den geöffneten Zustand versetzt sind.

Eine bevorzugte Ausführungsform der Filtereinheit (Anspruch 2) ist dadurch gekennzeichnet, dass der automatische Filterkartuschen-Verschluss derart eingerichtet ist, dass eine Öffnungskraft, die auf eine der Umgebung zugewandte Außenseite des automatischen Filterkartuschen-Verschlusses gerichtet ist, den automatischen Filterkartuschen-Verschluss von dem geschlossenen Zustand in den geöffneten Zustand versetzt. Auf diese Weise kann besonders einfach eine Kopplung der Filterkartusche mit einer Öl-/Wasser-Trennvorrichtung mit gleichzeitiger automatischer Öffnung des Ablaufs aus der Filterkartusche erfolgen. Insbesondere ist die Außenseite des automatischen Filterkartuschen-Verschlusses dabei der Unterseite der Filterkartusche zugeordnet. Dabei ist die Öffnungskraft insbesondere in Richtung des Filterinnenraums gerichtet. Bevorzugt reicht nicht einfach eine beliebig kleine Kraft als Öffnungskraft aus, sondern muss die Öffnungskraft eine vorgegebene Mindestkraft betragen.

Eine weitere bevorzugte Ausführungsform der Filtereinheit (Anspruch 3) ist dadurch gekennzeichnet, dass eine Filterkartuschen-Anschlagsfläche zur Anlage gegen eine stromabwärts angeordnete Komponente der Öl/Wasser-Trennvorrichtung während des Betriebs der Öl/Wasser-Trennvorrichtung vorgesehen ist. Dadurch kann mithilfe der Filterkartuschen-Anschlagsfläche beispielsweise bestimmungsgemäß eine Zulauföffnung in einer stromabwärts angeordneten, also nachgeschalteten, Bodeneinheit einer Öl/Wasser-Trennvorrichtung geöffnet werden. So kann vorteilhaft automatisch der Zulauf in eine stromabwärts anschließende Sammelleitung ermöglicht werden. Vorzugsweise kann vorgesehen sein, dass die Filterkartuschen-Anschlagsfläche gegenüber einer Unterseiten-Ebene der Filterkartusche zurückversetzt ist. Dadurch ist die Filterkartuschen-Anschlagsfläche als funktionale Fläche gegenüber der äußersten Unterseite des Gehäuses zurückversetzt, sodass die Filterkartuschen-Anschlagsfläche besser geschützt ist gegen einen ungewünschten Anschlag von außen. Weiter vorzugsweise kann vorgesehen sein, dass eine durch die Ablauföffnung definierte Öffnungsebene gegenüber der Filterkartuschen-Anschlagsfläche zurückversetzt ist, sodass die Filterkartuschen-Anschlagsfläche grundsätzlich einfach zu erreichen ist, etwa für den bestimmungsgemäßen Anschlag an nachgeschaltete Komponenten der Öl/Wasser-Trennvorrichtung, wie beispielsweise dem Zulauf in eine Sammelleitung einer Bodeneinheit.

Eine weitere bevorzugte Ausführungsform der Filtereinheit (Anspruch 4) ist dadurch gekennzeichnet, dass die Filterkartuschen-Anschlagsfläche auf einer der Umgebung zugewandten Außenseite des automatischen Filterkartuschen-Verschlusses ausgebildet ist. Dadurch können auf besonders effektive Funktionen miteinander verbunden bzw. gleichzeitig realisiert werden. Denn die Filterkartuschen-Anschlagsfläche kann, wie beschrieben, vorteilhaft zur Bedienung nachgeschalteter Komponenten der Öl/Wasser-Trennvorrichtung, etwa zum Öffnen einer nachgeschalteten Sammelleitung einer Bodeneinheit, genutzt werden. Gleichzeitig kann jedoch auch auf vorteilhafte Weise die Bedienung, sprich das Öffnen, des Filterkartuschen-Verschlusses erfolgen, wenn der bestimmungsgemäße Anschlag gegen die Filterkartuschen-Anschlagfläche erfolgt.

Eine weitere bevorzugte Ausführungsform der Filtereinheit (Anspruch 5) ist dadurch gekennzeichnet, dass der automatische Filterkartuschen-Verschluss zwischen dem geöffneten Zustand zum Ermöglichen des Ablaufs von gereinigter Flüssigkeit aus dem Filterinnenraum und dem geschlossenen Zustand zum Verhindern des Ablaufs von gereinigter Flüssigkeit aus dem Filterinnenraum wechselbar ausgebildet ist. Dadurch wird ein besonders effektiver und sauberer Filterwechsel ermöglicht. Denn auf diese Weise kann vorteilhaft bereits die Demontage der Filterkartusche von der Öl/Wasser-Trennvorrichtung dafür sorgen, dass der vor der Demontage in dem geöffneten Zustand befindliche Filterkartuschen-Verschluss in seinen geschlossenen Zustand wechselt, ohne dass etwa ein aktives Verschließen durch den Anwender notwendig wäre.

Eine weitere bevorzugte Ausführungsform der Filtereinheit (Anspruch 6) ist dadurch gekennzeichnet, dass die Schließkraft auf die dem Filterinnenraum zugewandte Innenseite des automatischen Filterkartuschen-Verschlusses gerichtet ist. Auf diese Weise ist besonders einfach das Zusammenwirken aus Filterkartusche und Öl-/Wasser-Trennvorrichtung derart realisiert, dass bei einer Demontage einer Filterkartusche gleichzeitig automatisch der Ablauf aus der Filterkartusche verschlossen und somit ein Austritt von Kondensat erfolgreich verhindert werden. Insbesondere weist die Innenseite des automatischen Filterkartuschen-Verschlusses dabei in Richtung des Filterinnenraums und grundsätzlich in Richtung der Oberseite der Filterkartusche. Dabei ist die Schließkraft in Richtung des Filterinnenraums gerichtet.

Eine weitere bevorzugte Ausführungsform der Filtereinheit (Anspruch 7) ist dadurch gekennzeichnet, dass eine Feder an die Innenseite des automatischen Filterkartuschen-Verschlusses anschließend angeordnet ist und die Schließkraft auf die Innenseite des automatischen Filterkartuschen-Verschlusses wenigstens teilweise ausübt. Dadurch kann automatische Filterkartuschen-Verschluss besonders sicher in seinem geschlossenen Zustand gehalten bzw. erneut in diesen versetzt werden. Vorschlagsgemäß übt die in dem Filterinnenraum befindliche zu reinigende Flüssigkeit bzw. bereits gereinigte Flüssigkeit (stromabwärts des Filtermaterials) die Schließkraft wenigstens teilweise auf die Innenseite des automatischen Filterkartuschen-Verschlusses aus. Bevorzugt reicht nicht einfach eine beliebig kleine Kraft als Schließkraft aus, sondern muss die Schließkraft eine vorgegebene Mindestkraft betragen.

Eine weitere bevorzugte Ausführungsform der Filtereinheit (Anspruch 8) ist dadurch gekennzeichnet, dass, in dem geöffneten Zustand des automatischen Filterkartuschen-Verschlusses, ein Durchflusskanal zwischen einer der Umgebung zugewandten Außenseite des automatischen Filterkartuschen-Verschlusses und dem Gehäuse im Bereich der Ablauföffnung gebildet ist, wobei der Durchflusskanal eine Fluidverbindung vom Filterinnenraum nach außen bereitstellt. Konkret ist vorzugsweise in dem montierten Zustand einer Filterkartusche vorgesehen, dass der Durchflusskanal die Fluidverbindung zu der Sammelleitung der angeschlossenen Öl-/Wasser-Trennvorrichtung bzw. Bodeneinheit der Öl-/Wasser-Trennvorrichtung bereitstellt. Insbesondere ist die Außenseite des automatischen Filterkartuschen-Verschlusses dabei der Unterseite der Filterkartusche zugeordnet. Grundsätzlich meint nach außen hin hierbei aus dem Bereich der Filterkartusche heraus und nicht etwa in dem zusammengebauten Zustand, also wenn eine Filterkartusche in eine Filteraufnahme einer Bodeneinheit eingesetzt ist, aus der gesamten Öl/Wasser-Trennvorrichtung heraus.

Eine weitere bevorzugte Ausführungsform der Filtereinheit (Anspruch 9) ist dadurch gekennzeichnet, dass die Ablauföffnung, und insbesondere der in dem geöffneten Zustand des automatischen Filterkartuschen-Verschlusses gebildete Durchflusskanal, in dem geschlossenen Zustand des automatischen Filterkartuschen-Verschlusses derart verschlossen ist, dass eine der Umgebung zugewandte Außenseite des automatischen Filterkartuschen-Verschlusses in einem Außenbereich mit einer dem Filterinnenraum zugewandten Innenfläche des Gehäuses abdichtend in Wirkverbindung steht. Auf diese Weise ist vorteilhaft ein sicherer Verschluss der Filterkartusche gewährleistet. Insbesondere ist die Außenseite des automatischen Filterkartuschen-Verschlusses dabei der Unterseite der Filterkartusche zugeordnet.

Eine weitere bevorzugte Ausführungsform der Filtereinheit (Anspruch 10) ist dadurch gekennzeichnet, dass die Zulauföffnung einer Oberseite der Filterkartusche und die Ablauföffnung einer Unterseite der Filterkartusche zugeordnet ist, und dass ein Zulaufkanal vorgesehen ist, wobei der Zulaufkanal oberhalb der Zulauföffnung angeordnet ist und in Fluidverbindung mit der Zulauföffnung steht, und wobei der Zulaufkanal ferner eine Abzweigung zum Weiterleiten eines Teils von der zu reinigenden Flüssigkeit in eine benachbarte Filterkartusche aufweist. Auf diese Weise wird eine möglichst flexible Filterkartusche bereitgestellt. So kann die Filterkartusche mit weiteren benachbarten Filterkartuschen zusammen geschaltet werden und die Leistung des gesamten Filtersystems vorteilhaft auf einfache Weise angepasst werden. Wenn etwa mehrere Filterkartuschen parallelgeschaltet sind, dann kann jeweils ein Teil der zu reinigenden Flüssigkeit jeweils einer Filterkartusche zugeleitet werden. Bevorzugt können die mehreren Filterkartuschen dann in der Parallelschaltung dafür Sorge tragen, dass eine auszuwechselnde Filterkartusche ganz einfach aus dem Gesamtsystem demontiert werden kann, ohne das Gesamtsystem und somit den Filtervorgang stoppen zu müssen. Das aufwendige Auffangen von Kondensat in einem vorgeschalteten Sammelraum kann somit entfallen. In jedem Fall wird ein flexibles Gesamtsystem bereitgestellt, bei dem individuell durch Hinzufügen oder Hinwegnehmen von einzelnen Filterkartuschen die Leistungsfähigkeit der Öl/Wasser-Trennvorrichtung angepasst werden kann.

Weiter bevorzugt (Anspruch 11) kann der Zulaufkanal eine Eingangsöffnung zum initialen Eintreten der zu reinigende Flüssigkeit in die Filterkartusche und eine Abzweigungsöffnung zum Weiterleiten eines Teils von der zu reinigenden Flüssigkeit aus der Filterkartusche heraus in eine benachbarte Filterkartusche aufweisen, wobei die Abzweigungsöffnung zwischen einem geöffneten Zustand und einem geschlossenen Zustand wechselbar ausgebildet ist. Vorzugsweise ist weiterhin vorgesehen, dass die Abzweigungsöffnung zum fluiddichten Verbinden mit einer Eingangsöffnung einer benachbarte Filterkartusche ausgebildet ist. Vorzugsweise kann auch ein automatischer Zulauf-Verschluss, der die Eingangsöffnung verschließen bzw. öffnen kann, und/oder ein automatischer Abzweigungs-Verschluss, der die Abzweigungsöffnung verschließen bzw. öffnen kann, vorgesehen sein, sodass auch die Eingangsöffnung bzw. die Abzweigungsöffnung vorteilhaft in einen geöffneten Zustand und bei Bedarf auch automatisch wieder in einen geschlossenen Zustand versetzt werden können. Dabei können die Verschlüsse auf die im Zusammenhang mit dem automatischen Filterkartuschen-Verschluss beschriebene Weise auch automatisch in die jeweiligen bestimmungsgemäßen Zustände offen bzw. verschlossen versetzbar sein. Es können vorzugsweise auch Federn vorgesehen sein, die den jeweiligen Verschluss grundsätzlich in den geschlossenen Zustand versetzen. Auf diese Weise kann vorteilhaft erreicht werden, dass bei einer Entnahme einer Filterkartusche auch aus dem Zulaufkanal nahezu keine Flüssigkeit ungewünscht heraustritt.

Eine weitere bevorzugte Ausführungsform der Filtereinheit (Anspruch 12) ist dadurch gekennzeichnet, dass die Ablauföffnung einer Unterseite der Filterkartusche zugeordnet und durch die Ablauföffnung eine Öffnungsebene definiert ist, und dass das Gehäuse an der Unterseite wenigstens einen, vorzugsweise als umlaufenden Rand ausgebildeten, Vorsprung gegenüber der Öffnungsebene der AblaufÖffnung zur Positionierung der Filterkartusche in einer zu dem Vorsprung korrespondierenden Filteraufnahme der Öl/Wasser-Trennvorrichtung aufweist. Auf diese Weise kann die Montage der Filterkartuschen besonders vereinfacht werden. So kann der Vorsprung als Führung und Unterstützung zur Montage dienen. Es wird ein einfaches Eingreifen in den vorgesehen Kartuschen-Stellplatz, also etwa in die entsprechende Filteraufnahme einer Bodeneinheit, ermöglicht. Insbesondere ist der Vorsprung weg gerichtet vom Filterinnenraum. Beispielsweise können seitliche Stutzen als Vorsprung dienen. Die Ablauföffnung ist bevorzugt durch die Ausbildung des Vorsprungs gegenüber einem untersten Abschluss der Unterseite der Filterkartusche zurückversetzt. Besonders vorteilhaft können die Filterkartuschen einfach und ohne Hilfsmittel von einem Anwender, beispielsweise von einer Serviceperson, in die vorgesehene Position in der Öl-/Wasser-Trennvorrichtung eingesetzt werden.

Eine bevorzugte Ausführungsform der Bodeneinheit (Anspruch 14) ist dadurch gekennzeichnet, dass mindestens zwei Filteraufnahmen zum lösbaren Anschließen und zur erneuten Demontage von mindestens zwei Filterkartuschen vorgesehen sind. Dabei kann jede Filteraufnahme eine eigene, vorbeschriebene Eingangsöffnung aufweisen, jedoch weist die Bodeneinheit bevorzugt lediglich eine gemeinsame Sammelleitung sowie eine gemeinsame Steigleitung auf. Es können auch beliebig viele Filteraufnahmen für mehrere Filterkartuschen vorgesehen sein.

Eine weitere bevorzugte Ausführungsform der Bodeneinheit (Anspruch 15) ist dadurch gekennzeichnet, dass der automatische Sammler-Verschluss derart eingerichtet ist, dass eine Öffnungskraft, die auf eine der Umgebung zugewandte Außenseite des automatischen Sammler-Verschlusses gerichtet ist, den automatischen Sammler-Verschluss von dem geschlossenen Zustand in den geöffneten Zustand versetzt. Auf diese Weise kann besonders einfach eine Kopplung einer zu installierenden Filterkartusche mit der Bodeneinheit mit gleichzeitiger automatischer Öffnung des Zulaufs der gereinigten Flüssigkeit in die Sammelleitung der Bodeneinheit erfolgen. Insbesondere ist die Außenseite des automatischen Sammler-Verschlusses dabei der Oberseite der Bodeneinheit zugeordnet. Dabei ist die Öffnungskraft insbesondere in Richtung der Sammelleitung gerichtet. Bevorzugt reicht nicht einfach eine beliebig kleine Kraft als Öffnungskraft aus, sondern muss die Öffnungskraft eine vorgegebene Mindestkraft betragen.

Vorzugsweise ist der automatische Sammler-Verschluss derart eingerichtet, dass eine Schließkraft, die auf eine der Sammelleitung zugewandte Innenseite des automatischen Sammler-Verschlusses, und insbesondere in Richtung der Umgebung, gerichtet ist, den automatischen Sammler-Verschluss von dem geöffneten Zustand in den geschlossenen Zustand versetzt. Auf diese Weise ist besonders einfach das Zusammenwirken aus vorgeschalteter Filterkartusche und Bodeneinheit der Öl-/Wasser-Trennvorrichtung derart realisiert, dass bei einer Demontage einer Filterkartusche gleichzeitig automatisch der Zugang zu der Sammelleitung der Bodeneinheit verschlossen und somit ein Austritt von Kondensat erfolgreich verhindert werden. Insbesondere weist die Innenseite des automatischen Sammler-Verschlusses dabei in Richtung der Sammelleitung, weiter bevorzugt in Richtung der Unterseite der Bodeneinheit. Dabei ist die Schließkraft insbesondere in Richtung weg von der Sammelleitung und in Richtung der Oberseite der Bodeneinheit gerichtet.

Eine weitere bevorzugte Ausführungsform der Bodeneinheit (Anspruch 16) ist dadurch gekennzeichnet, dass eine Feder an die Innenseite des automatischen Sammler-Verschlusses anschließend angeordnet ist und die Schließkraft auf die Innenseite des automatischen Sammler-Verschlusses wenigstens teilweise ausübt. Dadurch kann automatische Sammler-Verschluss besonders sicher in seinem geschlossenen Zustand gehalten bzw. erneut in diesen versetzt werden. Alternativ oder zusätzlich übt vorzugsweise die in der Sammelleitung befindliche gereinigte Flüssigkeit die Schließkraft auf die Innenseite des automatischen Sammler-Verschlusses wenigstens teilweise aus. Insbesondere die der Sammelleitung nachfolgende Steigleitung unterstützt somit vorteilhaft ein automatisches und schnelles Verschließen der Eingangsöffnungen der Bodeneinheit mittels der automatischen Sammler-Verschlüsse über die vorhandene Flüssigkeitssäule. Bevorzugt reicht nicht einfach eine beliebig kleine Kraft als Schließkraft aus, sondern muss die Schließkraft eine vorgegebene Mindestkraft betragen.

Eine weitere bevorzugte Ausführungsform der Bodeneinheit (Anspruch 17) ist dadurch gekennzeichnet, dass, in dem geöffneten Zustand des automatischen Sammler-Verschlusses, ein Durchflusskanal zwischen einer der Umgebung zugewandten Außenseite des automatischen Sammler-Verschlusses und der Bodeneinheit im Bereich der Eingangsöffnung gebildet ist, welcher Durchflusskanal eine Fluidverbindung von außen in die Sammelleitung bereitstellt. Insbesondere ist in dem montierten Zustand einer Filterkartusche in der Filteraufnahme der Bodeneinheit vorgesehen, dass der Durchflusskanal die Fluidverbindung von der angeschlossenen Filterkartusche und dort dem Filterinnenraum zu der Sammelleitung der Bodeneinheit der Öl-/Wasser-Trennvorrichtung bereitstellt. Insbesondere ist die Außenseite des automatischen Sammler-Verschlusses dabei der Oberseite der Bodeneinheit zugeordnet, und weiter bevorzugt im montierten Zustand einer Filterkartusche der Unterseite der Filterkartusche zugewandt.

Weiter vorzugsweise ist vorgesehen, dass eine der Umgebung zugewandte Außenseite des automatischen Sammler-Verschlusses in einem Außenbereich mit einer der Sammelleitung zugewandten Innenfläche einer Oberseite der Bodeneinheit abdichtend in Wirkverbindung steht. Auf diese Weise ist vorteilhaft ein sicherer Verschluss der Bodeneinheit gewährleistet. Insbesondere ist die Außenseite des automatischen Sammler-Verschlusses dabei der Oberseite der Bodeneinheit zugeordnet.

Eine weitere bevorzugte Ausführungsform der Bodeneinheit (Anspruch 18) ist dadurch gekennzeichnet, dass die Eingangsöffnung einer Oberseite der Bodeneinheit zugeordnet und durch die Eingangsöffnung eine Öffnungsebene definiert ist, und dass die Oberseite wenigstens eine, vorzugsweise umlaufend ausgebildete, Aussparung aufweist, wobei die Aussparung gegenüber der Öffnungsebene der Eingangsöffnung zur Aufnahme einer Filterkartusche mit wenigstens einem zu der Aussparung korrespondierenden Vorsprung zurückversetzt ausgebildet ist. Auf diese Weise kann eine Montage von korrespondierenden Filterkartuschen in den Filteraufnahmen der Bodeneinheit besonders vereinfacht werden. So kann die Aussparung als Führung und Unterstützung zur Montage dienen. Es wird ein einfaches Eingreifen in den vorgesehen Kartuschen-Stellplatz, also in die entsprechende Filteraufnahme der Bodeneinheit, ermöglicht. Insbesondere ist die Aussparung in Richtung der Sammelleitung gerichtet. Besonders vorteilhaft können die Filterkartuschen einfach und ohne Hilfsmittel von einem Anwender, beispielsweise von einer Serviceperson, in die vorgesehene Position in der Bodeneinheit der ÖI-/Wasser-Trennvorrichtung eingesetzt werden. Dazu können bevorzugt einfach der Vorsprung bzw. die Vorsprünge einer Filterkartusche in die entsprechende Aussparung der Filteraufnahme der Bodeneinheit eingesetzt werden.

Eine weitere bevorzugte Ausführungsform der Bodeneinheit (Anspruch 19) ist dadurch gekennzeichnet, dass der automatischen Sammler-Verschluss zwischen dem geöffneten Zustand zum Ermöglichen des Einleitens der in der vorgeschalteten Filtereinheit gereinigten Flüssigkeit und dem geschlossenen Zustand zum Verschließen einer Fluidverbindung zwischen der Sammelleitung und der Umgebung wechselbar ausgebildet ist. Dadurch kann bereits die Demontage der Filtereinheit von der vorschlagsgemäßen Bodeneinheit der Öl/Wasser-Trennvorrichtung besonders effektiv dafür sorgen, dass der vor der Demontage in dem geöffneten Zustand befindliche Sammler-Verschluss in seinen geschlossenen Zustand wechselt, ohne dass etwa ein aktives Verschließen durch den Anwender notwendig wäre.

Eine bevorzugte Ausführungsform der Öl/Wasser-Trennvorrichtung (Anspruch 21) ist dadurch gekennzeichnet, dass eine Vielzahl der Filterkartuschen vorgesehen ist, wobei die Vielzahl der Filterkartuschen parallelgeschaltet ist und die Filterkartuschen mit ihren Ablauföffnungen jeweils in die Sammelleitung als eine gemeinsame Sammelleitung münden und diese gemeinsame Sammelleitung wiederum in die Steigleitung als eine gemeinsame Steigleitung der Öl/Wasser-Trennvorrichtung mündet.

Nach einem weiteren Aspekt der vorliegenden Erfindung, welcher unabhängig von den vorbeschriebenen Gegenständen ist, wird ein Verfahren zum Wechseln einer Filtereinheit einer Öl/Wasser-Trennvorrichtung zum Entfernen ölhaltiger Bestandteile aus einem Öl/Wasser-Gemisch vorgeschlagen. Dabei wird eine Filtereinheit in Form einer Filterkartusche zum lösbaren Anschließen an die und zur erneuten Demontage von der Öl/Wasser-Trennvorrichtung an einer Filteraufnahme einer Bodeneinheit der Öl/Wasser-Trennvorrichtung eingesetzt, wobei dieses Einsetzen einen automatischen Filterkartuschen-Verschluss, welcher eine Ablauföffnung der Filterkartusche in einem geschlossenen Zustand verschließt, von seinem geschlossenen Zustand in seinen geöffneten Zustand versetzt.

Vorzugsweise ist bei dem Verfahren weiter vorgesehen, dass ein Demontieren einer in die Filteraufnahme eingesetzten Filterkartusche dazu führt, dass der automatische Filterkartuschen-Verschluss von seinem geöffneten Zustand automatisch in seinen geschlossenen Zustand versetzt wird. Ebenso ist bei dem Verfahren besonders bevorzugt vorgesehen, dass ein Demontieren einer in die Filteraufnahme eingesetzten Filterkartusche dazu führt, dass ein automatischer Sammler-Verschluss, der eine Eingangsöffnung der Bodeneinheit verschließbar eingerichtet ist, wobei die Eingangsöffnung eine Fluidverbindung von der Filterkartusche über die Ablauföffnung der Filterkartusche in eine Sammelleitung der Bodeneinheit bereitstellt, von seinem geöffneten Zustand automatisch in seinen geschlossenen Zustand versetzt wird.

Weitere vorteilhafte und bevorzugte Ausgestaltungen ergeben sich aus der nachfolgenden Beschreibung mit Bezug auf die Figuren. In der lediglich ein Ausführungsbeispiel wiedergebenden Zeichnung zeigt:
- Fig. 1: eine schematische Darstellung einer Öl/Wasser-Trennvorrichtung nach dem Stand der Technik;
- Fig. 2: eine schematische Darstellung einer vorschlagsgemäßen Öl/Wasser-Trennvorrichtung;
- Fig. 3: eine schematische Darstellung einer Filtereinheit in Form einer vorschlagsgemäßen Filterkartusche;
- Fig. 4: eine schematische Darstellung einer vorschlagsgemäßen Bodeneinheit;
- Fig. 5: in der Ansicht a) die Detailansicht Y aus Fig. 2, sowie in der Ansicht b) den automatischen Sammler-Verschluss und den automatischen Filterkartuschen-Verschluss in Einzelansichten;
- Fig. 6: die Detailansicht Z aus Fig. 2;
- Fig. 7: eine weitere schematische Darstellung einer Filtereinheit in Form einer weiteren vorschlagsgemäßen Filterkartusche;
- Fig. 8: eine weitere schematische Darstellung einer weiteren vorschlagsgemäßen Öl/Wasser-Trennvorrichtung mit Filterkartuschen gemäß Fig. 7; und
- Fig. 9: grundsätzliche Anordnungen der vorschlagsgemäßen Filterkartuschen in verschiedenen Öl/Wasser-Trennvorrichtungen in den Ansichten a) bis e).

Bei der in der Fig. 2 schematisch dargestellten vorschlagsgemäßen Öl/Wasser-Trennvorrichtung 10 handelt es sich um eine Öl/Wasser-Trennvorrichtung 10 zum Entfernen ölhaltiger Bestandteile aus einem Öl/Wasser-Gemisch als zu reinigende Flüssigkeit L, welche als Kondensat aus einem Druckluftprozess der Öl/Wasser-Trennvorrichtung 10. Die zu reinigende Flüssigkeit L wird durch die Öl/Wasser-Trennvorrichtung 10 derart gereinigt, dass schließlich gereinigte Flüssigkeit W bereitgestellt wird, bei welcher es sich um im Wesentlichen ölfreies Wasser handelt, das der Kanalisation zugeführt werden kann.

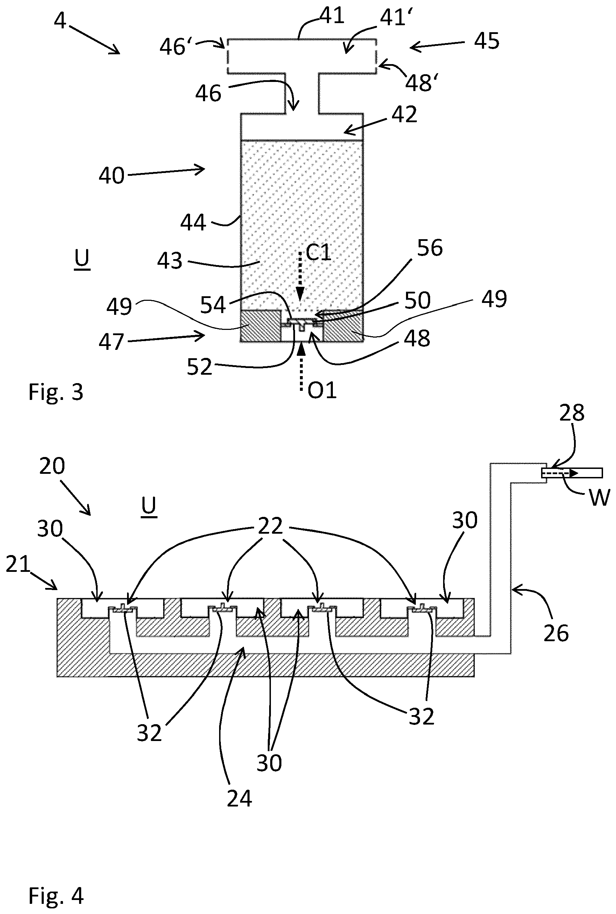

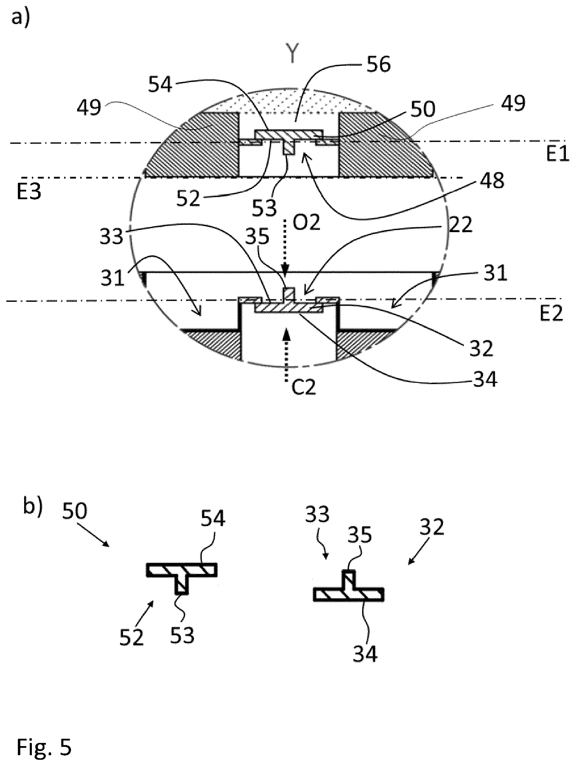

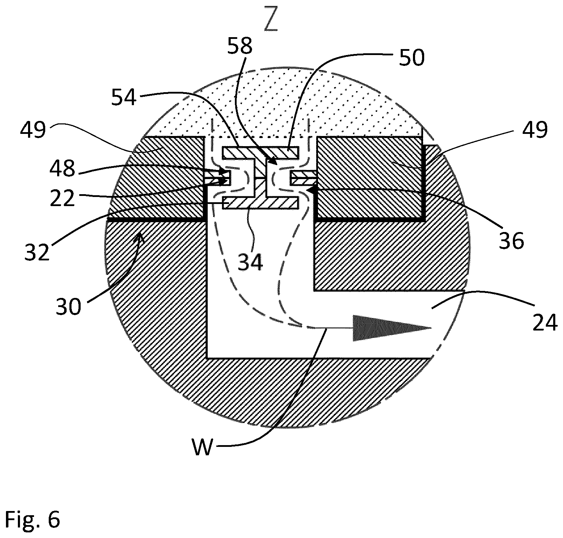

Die vorschlagsgemäße Öl/Wasser-Trennvorrichtung 10 weist eine Bodeneinheit 20 auf, welche im Detail auch in Fig. 4 dargestellt ist, auf die bei der nachfolgenden Beschreibung gleichzeitig Bezug genommen wird. Ferner weist die dargestellte Öl/Wasser-Trennvorrichtung 10 drei bereits angeschlossene Filtereinheiten 4 in Form der drei links dargestellten Filterkartuschen 40, 40', 40" auf. Eine weitere Filterkartusche 40 ist rechts dargestellt, jedoch in einem nicht in der Öl/Wasser-Trennvorrichtung 10 integrierten, sprich nicht mit der Bodeneinheit 20 verbundenem, Zustand. Eine einzelne vorschlagsgemäße Filterkartusche 40 ist ebenfalls in Fig. 3 dargestellt, auf die bei der nachfolgenden Beschreibung gleichzeitig Bezug genommen wird. Ferner sind in Fig. 5 bzw. 6 die Detailansichten Y bzw. Z der Fig. 2 vergrößert dargestellt, worauf bei der nachfolgenden Beschreibung gleichzeitig Bezug genommen wird.

Die vorschlagsgemäße Filtereinheit 4, welche als Filterkartusche 40 zum lösbaren Anschließen an die und zur erneuten Demontage von der Öl/Wasser-Trennvorrichtung 10 eingerichtet ist, weist einen Filterinnenraum 42 auf, in dem Adsorptionsfiltermaterial 43 zur Adsorption von dispergiertem Öl angeordnet ist. Ein Gehäuse 44 trennt dabei den Filterinnenraum 42 von einer Umgebung U. Die zu reinigende Flüssigkeit L wird zwecks Filterung der Ölbestandteile dem Filterinnenraum 42 zugeführt, indem sie über eine Zulauföffnung 46 zum Bereitstellen eines Zulaufs der zu reinigenden Flüssigkeit L in den Filterinnenraum 42 geleitet wird. Stromabwärts des Adsorptionsfiltermaterials 43 weist das Gehäuse 44 eine Ablauföffnung 48 zum Bereitstellen eines Ablaufs von gereinigter Flüssigkeit W aus dem Filterinnenraum 42 auf. Die Ablauföffnung 48 ist einer Unterseite 47 der Filterkartusche 40 zugeordnet.

Wesentlich ist für die vorschlagsgemäße Filterkartusche 40, dass die Ablauföffnung 48 des Gehäuses 44 mittels eines automatischen Filterkartuschen-Verschlusses 50 verschließbar eingerichtet ist. Dabei ist der automatische Filterkartuschen-Verschluss 50 in dem vorliegend dargestellten und insofern bevorzugten Ausführungsbeispiel zwischen einem geöffneten Zustand zum Ermöglichen des Ablaufs von gereinigter Flüssigkeit W aus dem Filterinnenraum 42 und einem geschlossenen Zustand zum Verhindern des Ablaufs von gereinigter Flüssigkeit W aus dem Filterinnenraum 42 wechselbar ausgebildet. Der geschlossene Zustand des automatischen Filterkartuschen-Verschlusses 50 ist insbesondere in Fig. 3, aber auch bei der ganz rechts angeordneten Filterkartusche 40 in Fig. 2 bzw. in der Detailansicht Y in Fig. 5 a) zu erkennen. Der geöffnete Zustand wiederum ist in Fig. 2 bei den drei links angeordneten Filterkartuschen 40, 40', 40", sowie im Detail in der die Detailansicht Z wiedergebenden Fig. 6 zu erkennen.

Die vorschlagsgemäße Bodeneinheit 20 der Öl/Wasser-Trennvorrichtung 10 weist eingangsseitig wenigstens eine Eingangsöffnung 22, in dem dargestellten Fall vier Eingangsöffnungen 22, zum Einleiten von in der vorgeschalteten Filtereinheit 4 gereinigter Flüssigkeit W auf. Die Eingangsöffnungen 22 stellen grundsätzlich jeweils einen Zugang für die gereinigte Flüssigkeit W in eine Sammelleitung 24 bereit. Über die Sammelleitung 24 wiederum wird die gereinigte Flüssigkeit W weitergeleitet, und zwar konkret in eine Steigleitung 26, die dazu mit der Sammelleitung 24 in Fluidverbindung steht. Die Steigleitung 26 ist schließlich zum Ableiten der gereinigten Flüssigkeit W über eine stromabwärts vorgesehene Auslassöffnung 28 eingerichtet, über welche letztlich die gereinigte Flüssigkeit W beispielsweise der Kanalisation zugeführt werden kann.

Wesentlich ist für die vorschlagsgemäße Bodeneinheit 20, dass wenigstens eine Filteraufnahme 30 vorgesehen ist (in dem konkret dargestellten Fall sind vier Filteraufnahmen 30 vorhanden), und dass die Filteraufnahme 30 zum lösbaren Anschließen und zur erneuten Demontage der vorgeschalteten Filtereinheit 4 in Form der Filterkartusche 40 eingerichtet ist. Vorschlagsgemäß ist die Eingangsöffnung 22 im Bereich der Filteraufnahme 30 angeordnet und mittels eines automatischen Sammler-Verschlusses 32 verschließbar eingerichtet. Dabei trennt der automatische Sammler-Verschluss 32 die Sammelleitung 24 von der Umgebung U. Ferner ist der automatische Sammler-Verschluss 32 in dem vorliegend dargestellten und insofern bevorzugten Ausführungsbeispiel zwischen einem geöffneten Zustand zum Ermöglichen des Einleitens der in der vorgeschalteten Filtereinheit 4 gereinigten Flüssigkeit W und einem geschlossenen Zustand zum Verschließen einer Fluidverbindung zwischen der Sammelleitung 24 und der Umgebung U, bzw. dem Filterinnenraum 42 der vorgeschalteten Filterkartusche 40, wechselbar ausgebildet.

In der vorschlagsgemäßen Öl-Wasser-Trennvorrichtung 10 korrespondieren und interagieren die vorschlagsgemäße Bodeneinheit 20 und die vorschlagsgemäße Filterkartusche 40 in besonders vorteilhafter Weise miteinander. Vorschlagsgemäß sind austauschbare und einfach handzuhabende Filterkartuschen 40 bereitgestellt, die mit der Bodeneinheit 20 der Öl-/Wasser-Trennvorrichtung 10 auf simple Weise zusammenwirken und vor allem ohne besondere zusätzliche Handgriffe zum Öffnen oder Verschließen installiert und demontiert werden können. Das System aus Bodeneinheit 20 mit Filteraufnahmen 30 für die Filterkartuschen 40, 40', 40" und den Filterkartuschen 40, 40', 40" selbst ist dabei in vorteilhafter Weise aufeinander abgestimmt. So sind die Ablauföffnungen 48 der Filterkartuschen 40 über den jeweiligen automatischen Filterkartuschen-Verschluss 50 grundsätzlich verschlossen (Fig. 3 und 5 a)). Dieser Zustand wird als geschlossener Zustand des Filterkartuschen-Verschlusses 50 bezeichnet. Die Ablauföffnungen 48 können bei der Montage jedoch ganz automatisch, also ohne eigens erforderliche Handgriffe, geöffnet werden (Fig. 2: rechts; und Fig. 6). Konkret wird durch das Einsetzen der Filterkartusche 40 in die korrespondierende Filteraufnahme 30 der Bodeneinheit 20 dafür gesorgt, dass der automatische Filterkartuschen-Verschluss 50 von seinem verschlossenen Zustand in den geöffneten Zustand wechselt, ohne dass es beispielsweise eines aktiven Öffnens des Filterkartuschen-Verschlusses 50 durch den Anwender bedürfte. Analog hierzu sorgt bereits die Demontage der Filterkartusche 40 von der Bodeneinheit 20 der Öl/Wasser-Trennvorrichtung 10 dafür, dass der in dem geöffneten Zustand befindliche Filterkartuschen-Verschluss 50 erneut in seinen geschlossenen Zustand wechselt, ohne dass etwa ein aktives Verschließen durch den Anwender notwendig wäre.

Beim Öffnungsvorgang sorgt hierfür die Öffnungskraft O1, welche in Fig. 3 durch den unteren punktierten Pfeil angedeutet ist. Der automatische Filterkartuschen-Verschluss 50 ist also derart eingerichtet, dass die Öffnungskraft O1 den automatischen Filterkartuschen-Verschluss 50 von dem geschlossenen Zustand in den geöffneten Zustand versetzt. Die Öffnungskraft O1 ist auf eine der Umgebung U zugewandte Außenseite 52 des automatischen Filterkartuschen-Verschlusses 50 gerichtet. Konkret ist die Öffnungskraft O1 in Richtung des Filterinnenraums 42 gerichtet. Beim Ausüben einer gewissen vorgegebenen Öffnungskraft O1 wird der automatische Filterkartuschen-Verschluss 50 in Richtung des Filterinnenraums 42 verschoben und somit in den in Fig. 6 ersichtlichen geöffneten Zustand versetzt.

Für das Wirken der Öffnungskraft O1 sorgt das alleinige Aufsetzen bzw. Einsetzen der Filterkartusche 40 in die vorgesehene Filteraufnahme 30. So wird die Filterkartusche 40 mit ihrer Unterseite 47 in die Filteraufnahme 30 bzw. dort konkret in die Aussparungen 31 eingesetzt. Dabei schlägt eine Filterkartuschen-Anschlagsfläche 53 an eine Sammler-Anschlagsfläche 35 an. Dies geht besonders gut aus der Zusammenschau der Fig. 5 und 6 hervor, wobei aus Fig. 5 b) wiederum die Ausgestaltung der beiden Verschlüsse automatischer Filterkartuschen-Verschluss 50 sowie automatischer Sammler-Verschluss 32 hervorgeht.

In dem dargestellten und insofern bevorzugten Ausführungsbeispiel ist die Filterkartuschen-Anschlagsfläche 53 gegenüber einer Unterseiten-Ebene E3 der Filterkartusche 40 zurückversetzt. Zudem ist die durch die Ablauföffnung 48 definierte Öffnungsebene E1 gegenüber der Filterkartuschen-Anschlagsfläche 53 zurückversetzt ist. Schließlich ist die Filterkartuschen-Anschlagsfläche 53 auf der der Umgebung U zugewandten Außenseite 52 des automatischen Filterkartuschen-Verschlusses 50 selbst ausgebildet.

Hinsichtlich der Sammler-Anschlagsfläche 35 wiederum ist vorgesehen, dass diese auf der der Umgebung U zugewandten Außenseite 33 des automatischen Sammler-Verschlusses 32 ausgebildet ist. Ferner ist die Sammler-Anschlagsfläche 35 gegenüber der durch die Eingangsöffnung 22 in die Sammelleitung 24 der Bodeneinheit 20 definierte Öffnungsebene E2 zurückversetzt ist.

Nachfolgend wird ein typischer Vorgang des Anschlusses der Filterkartusche 40 an die Bodeneinheit 20 beschrieben. So stößt die an der Außenseite 52 des automatischen Filterkartuschen-Verschlusses 50 ausgebildete Filterkartuschen-Anschlagsfläche 53 auf die obere Außenseite 32 des automatischen Sammler-Verschlusses 32 an, und zwar konkret dort gegen die Sammler-Anschlagsfläche 35. Hierdurch wird der automatische Filterkartuschen-Verschluss 50 nach oben bewegt und in seinen geöffneten Zustand versetzt, sowie gleichzeitig auch der automatische Sammler-Verschluss 32 nach unten bewegt und auch in seinen geöffneten Zustand versetzt, wie anhand der nachfolgenden Beschreibung der weiteren Figuren noch deutlich wird.

Beim Schließvorgang wiederum sorgt eine Schließkraft C1, welche in Fig. 3 durch den oberen punktierten Pfeil angedeutet ist, für das automatische Verschließen der Ablauföffnung 48. Der automatische Filterkartuschen-Verschluss 50 ist dabei derart eingerichtet, dass die Schließkraft C1 den automatischen Filterkartuschen-Verschluss 50 von dem geöffneten Zustand in den geschlossenen Zustand versetzt. Die Schließkraft ist auf eine dem Filterinnenraum 42 zugewandte Innenseite 54 des automatischen Filterkartuschen-Verschlusses 50, und zwar konkret weg von dem Filterinnenraum 42 und in Richtung der Umgebung U, gerichtet. Die Schließkraft C1 kann zumindest teilweise durch die in dem Filterinnenraum 42 befindliche zu reinigende Flüssigkeit bzw. gereinigte Flüssigkeit auf die Innenseite 54 des automatischen Filterkartuschen-Verschlusses 50 ausgeübt werden. Das ermöglicht einen schnellen, automatischen Schließvorgang. Denn, sobald einmal keine Öffnungskraft O1 mehr ausgeübt wird, um den automatischen Filterkartuschen-Verschluss 50 in seinem geöffneten Zustand zu halten, übt die in der Filterkartusche 40 angeordnete Flüssigkeit einen Druck auf die Innenseite 54 aus, sodass die Schließkraft C1 automatisch bereitgestellt wird. Der automatische Filterkartuschen-Verschluss 50 wird sodann durch die von der Flüssigkeit ausgeübte Kraft von dem in Fig. 6 dargestellten geöffneten Zustand in den in Fig. 3 und Fig. 5 a) dargestellten geschlossenen Zustand verschoben.

Um die Verschiebbarkeit des automatischen Filterkartuschen-Verschlusses 50 zwischen dem geschlossenen und geöffneten Zustand zu gewähren, ist zwischen der Ablauföffnung 48 und dem Adsorptionsfiltermaterial 43 ein Freiraum 56 angeordnet.

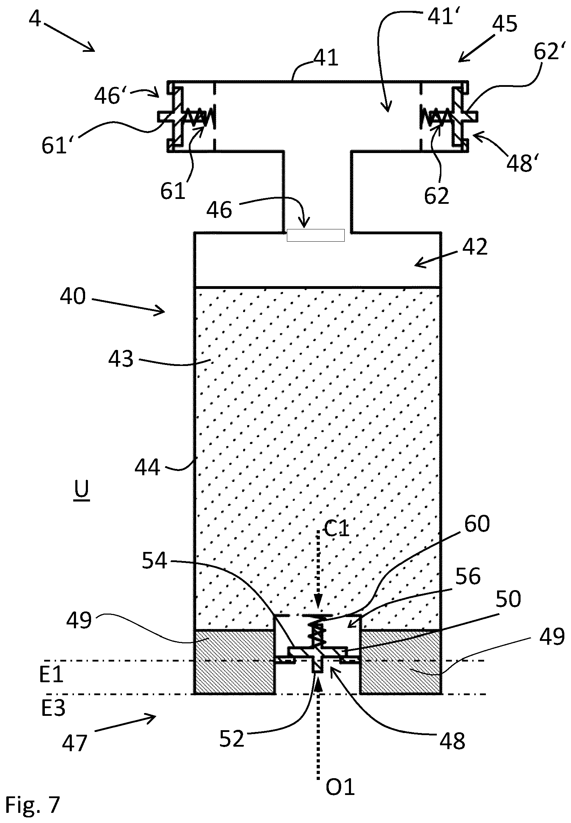

In Fig. 7 wiederum ist ein weiteres Ausführungsbeispiel einer Filterkartusche 40 dargestellt, wobei gleiche Bezugszeichen grundsätzlich gleiche Merkmale kennzeichnen und auf die vorangehende und auch nachstehende Beschreibung verwiesen werden kann. Im Unterschied zur Filterkartusche 40 aus Fig. 3 ist bei dem in Fig. 7 dargestellten Ausführungsbeispiel weiterhin eine Feder 60, und zwar an die Innenseite 54 des automatischen Filterkartuschen-Verschlusses 50 anschließend angeordnet, vorgesehen. Die zuvor beschriebene Schließkraft C1 wird in dieser Ausführungsform wenigstens teilweise durch diese Feder 60 auf die Innenseite 54 des automatischen Filterkartuschen-Verschlusses 50 ausgeübt. Dazu kann weiterhin auch die in dem Filterinnenraum 42 befindliche zu reinigende Flüssigkeit bzw. gereinigte Flüssigkeit die Schließkraft C1 auf die Innenseite 54 des automatischen Filterkartuschen-Verschlusses 50 wenigstens teilweise ausüben.

Die vorschlagsgemäße Bodeneinheit 20 wiederum, die beispielhaft in Fig. 4 dargestellt ist, ist mit Filteraufnahmen 30, im konkret dargestellten Fall mit vier Filteraufnahmen 30, für die anzuschließenden Filtereinheiten in Form der Filterkartuschen 40, 40', 40" ausgebildet. Die Filteraufnahme 30 stellt den Verknüpfungspunkt und eine mechanische Schnittstelle zwischen der stromaufwärts vorgesehenen Filterkartusche 40 und der an diese Filterkartusche 40 anschließenden Sammelleitung 24 zum Sammeln bzw. Weiterleiten der gereinigten Flüssigkeit W dar. Die Schnittstelle stellt letztlich die Eingangsöffnung 22 in die Bodeneinheit 20 bereit. Die Eingangsöffnung 22 ist jeweils über den automatischen Sammler-Verschluss 32 automatisch, also ohne eigens erforderliche Handgriffe, grundsätzlich verschlossen, kann jedoch auch automatisch, sprich ohne gesonderte Handgriffe, geöffnet werden. Konkret wird durch das Einsetzen einer korrespondierenden Filterkartusche 40 in die Filteraufnahme 30 der vorschlagsgemäßen Bodeneinheit 20 dafür gesorgt, dass der automatische Sammler-Verschluss 32 von seinem verschlossenen Zustand in den geöffneten Zustand wechselt, ohne dass es beispielsweise eines aktiven Öffnen eines Sammler-Verschlusses durch den Anwender bedürfte. Analog hierzu sorgt auch bereits die Demontage der Filterkartusche 40 von der Bodeneinheit 20 der Öl/Wasser-Trennvorrichtung 10 dafür, dass der zuvor in dem geöffneten Zustand befindliche automatische Sammler-Verschluss 32 in seinen geschlossenen Zustand wechselt, ohne dass etwa ein aktives Verschließen durch den Anwender notwendig wäre.

Wenn eine Filterkartusche 40, 40', 40" nicht an der Bodeneinheit 20 eingesetzt ist, verschließt sie sich durch Versetzen des automatischen Filterkartuschen-Verschlusses 50 in seinen geschlossenen Zustand selbständig. Durch den automatischen Filterkartuschen-Verschlusses 50 wird der Service somit sauberer und leichter, da kein Wasser aus der Filterkartusche 40, 40, 40" heraus und etwa auf die Bodeneinheit 20 tropfen kann. Jede Filteraufnahme 30 der Bodeneinheit 20 wiederum verschließt sich ebenso automatisch, wenn keine Filterkartusche 40, 40', 40" aufgesetzt ist. Dies ermöglicht die Variation der Anzahl der Filterkartuschen 40, 40', 40" bei gleichleibender Bodeneinheit 20 ohne das Wasser austritt.

In dem konkret dargestellten Ausführungsbeispiel sind vier Filteraufnahmen 30 vorgesehen, in welche vier Filterkartuschen 40 eingesetzt werden können. Es können aber auch mehr oder weniger Kartuschen-Stellplätze in Form von mehr oder weniger Filteraufnahmen 30 vorgesehen sein und somit mehr oder weniger Filterkartuschen 40 angeschlossen werden. Es müssen vor allem bei der vorschlagsgemäßen Öl/Wasser-Trennvorrichtung 10 nicht alle Filteraufnahmen 30 mit Filterkartuschen 40 belegt sein, da die Filteraufnahmen 30 bzw. gerade die darin befindlichen Eingangsöffnungen 22 in ihrem Grundzustand automatisch verschlossen sind, wenn keine Filterkartusche 30 in ihnen aufgenommen ist. Dies erleichtert in besonderer Weise den Wechsel von Filterkartuschen 40 bei der vorschlagsgemäßen Öl/Wasser-Trennvorrichtung 10.

So kann vorzugsweise auch das gesamte System in Form der Öl/Wasser-Trennvorrichtung 10 weiterhin in Betrieb bleiben, solange zumindest eine Filterkartusche 40 in ihrem Stellplatz in Form der Filteraufnahme 30 angeordnet und somit an die Bodeneinheit 20 angeschlossen und in das Gesamtsystem eingebunden verbleibt. Zur Entnahme einer Filterkartusche 40 muss der Filterungsvorgang der zu reinigenden Flüssigkeilt L daher nicht aufwendig angehalten oder angepasst werden. Selbstverständlich kann grundsätzlich auch vorgesehen sein, dass der Filtervorgang angehalten wird, um eine einzelne Filterkartusche 40 auszutauschen.

Der Öffnungsvorgang und Schließvorgang des automatischen Sammler-Verschlusses 32 erfolgt ähnlich wie der des automatischen Filterkartuschen-Verschlusses 50. Der automatische Sammler-Verschluss 32 ist derart eingerichtet, dass eine Öffnungskraft O2 (oberer punktierter Pfeil in Fig. 5 a)) den automatischen Sammler-Verschluss 32 von dem geschlossenen Zustand in den geöffneten Zustand versetzt. Dazu wird der automatische Sammler-Verschluss 32 von dem in Fig. 5 a) bzw. in Fig. 4 dargestellten oberen Position in die in Fig. 6 dargestellt untere Position verschoben. Die Öffnungskraft O2 ist auf eine der Umgebung U zugewandte Außenseite 33 des automatischen Sammler-Verschlusses 32, und konkret in Richtung der Sammelleitung 24, gerichtet. Dieser Öffnungsvorgang kann wie beschrieben durch einfaches Einsetzen der Filterkartusche 40 erfolgen, indem der automatischer Filterkartuschen-Verschluss 50 mit der an seiner Außenseite 52 vorgesehenen Filterkartuschen-Anschlagsfläche auf die Außenseite 33 des automatischen Sammler-Verschlusses 32 auf die Sammler-Anschlagsfläche 35 stößt. Dadurch werden sowohl der automatischer Filterkartuschen-Verschluss 50 als auch der automatische Sammler-Verschlusses 32 in ihren Positionen zurück verdrängt und beide in ihre geöffneten Zustände versetzt.

Des Weiteren ist der automatische Sammler-Verschluss 32 derart eingerichtet, dass eine Schließkraft C2 (unterer punktierter Pfeil in Fig. 5 a)), die auf eine der Sammelleitung 24 zugewandte Innenseite 34 des automatischen Sammler-Verschlusses 32, und zwar konkret in Richtung der Umgebung U und weg von der Sammelleitung 24, gerichtet ist, den automatischen Sammler-Verschluss 32 von dem geöffneten Zustand in den geschlossenen Zustand versetzt. Besonders vorteilhaft ist dabei, dass die in der Sammelleitung 24 befindliche gereinigte Flüssigkeit W die Schließkraft C2 auf die Innenseite 34 des automatischen Sammler-Verschlusses 32 wenigstens teilweise ausübt. Das ermöglicht den schnellen, automatischen Schließvorgang. Denn, sobald einmal keine Öffnungskraft O2 mehr ausgeübt wird, um den automatischen Sammler-Verschluss 32 in seinem geöffneten Zustand zu halten, übt die in der Sammelleitung 24 angeordnete Flüssigkeit einen Druck auf die Innenseite 34 aus, sodass die Schließkraft C2 automatisch bereitgestellt wird. Der automatische Sammler-Verschluss 32 wird sodann nur durch die von der gereinigten Flüssigkeit W ausgeübte Kraft von dem in Fig. 6 dargestellten geöffneten Zustand in den in Fig. 4 und Fig. 5 dargestellten geschlossenen Zustand nach oben verschoben.

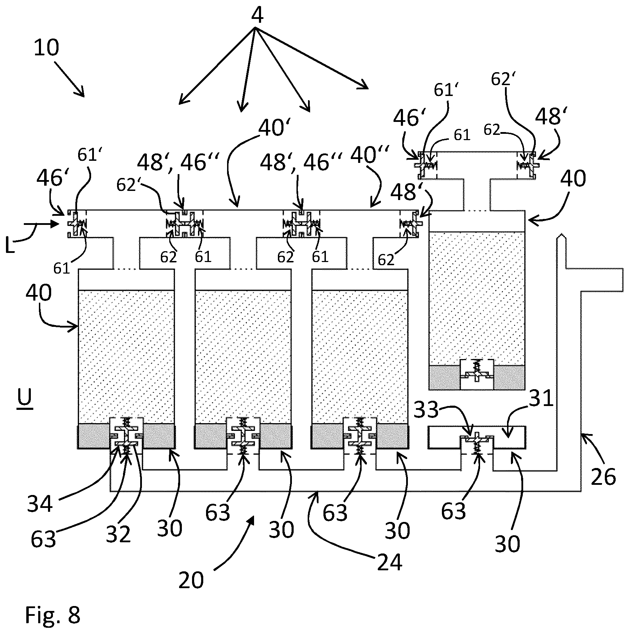

Es kann jedoch auch nach einer weiteren Ausführungsform der Bodeneinheit 20 bzw. der Öl/Wasser-Trennvorrichtung 10, wie in Fig. 8 dargestellt, vorgesehen sein, dass jeweils eine Feder 63 an die Innenseite 34 des automatischen Sammler-Verschlusses 32 anschließend angeordnet ist und die Schließkraft C2 auf die Innenseite 34 des automatischen Sammler-Verschlusses 32 wenigstens teilweise durch diese Feder 63 ausgeübt wird. Diese Federkraft kann alternativ oder zusätzlich zu der durch die in der Sammelleitung 24 befindliche gereinigte Flüssigkeit W ausgeübte Kraft auf automatischen Sammler-Verschluss 32 wirken.

Die weiteren Merkmale der in Fig. 8 dargestellten Öl/Wasser-Trennvorrichtung 10 ergeben sich im Wesentlichen aus der vorstehenden bzw. auch nachfolgenden Beschreibung der Öl/Wasser-Trennvorrichtung 10, wie sie etwa auch in Fig. 2 dargestellt ist. Insofern beziehen sich gleiche Bezugszeichen auch auf gleiche Merkmale, sodass die entsprechende Beschreibung auf das Ausführungsbeispiel gemäß Fig. 8 übertragen werden kann.

Bei der vorschlagsgemäßen Öl/Wasser-Trennvorrichtung 10 wirken die beschriebenen Verschlüsse in Form des automatischen Filterkartuschen-Verschlusses 50 und des automatischen Sammler-Verschlusses 32 in besonderer Weise miteinander. Die Filterkartusche 40 korrespondiert dazu derart mit der Filteraufnahme 30 korrespondiert, dass, wenn die Filterkartusche 40 in der Filteraufnahme 30 aufgenommen ist, der automatische Filterkartuschen-Verschluss 50 und der automatische Sammler-Verschluss 32 derart aufeinander stoßen, dass dadurch sowohl der automatische Filterkartuschen-Verschluss 50 als auch der automatische Sammler-Verschluss 32 jeweils in den geöffneten Zustand versetzt sind. Dies ist in Fig. 6 dargestellt.

Dabei ist in dem geöffneten Zustand des automatischen Filterkartuschen-Verschlusses 50 ein Durchflusskanal 58 zwischen einer der Umgebung U zugewandten Außenseite 52 (der Übersichtlichkeit halber nicht in Fig. 6, jedoch in Fig. 3 und 5 mit Bezugszeichen versehen) des automatischen Filterkartuschen-Verschlusses 50 und dem Gehäuse 44 im Bereich der Ablauföffnung 48 gebildet ist. Der Durchflusskanal 58 stellt in diesem geöffneten Zustand eine Fluidverbindung vom Filterinnenraum 42 nach außen bereit. Dabei ist in diesem Fall unter der Richtungsbeschreibung nach außen zu verstehen, dass die Fluidverbindung heraus aus dem Filterinnenraum 42 führt. Konkret soll und wird hierüber in dem in Fig. 2 an den drei linken Stellplätzen und in Fig. 6 im Detail dargestellten Fall einer angeschlossenen, also in die Filteraufnahme 30 eingesetzten, Filterkartusche 40 eine Fluidverbindung erzielt, die den Filterinnenraum 42 mit der nachfolgenden Sammelleitung 24 der Bodeneinheit 20 der vorschlagsgemäßen Öl/Wasser-Trennvorrichtung 10 bereitstellt.

In dem geöffneten Zustand des automatischen Sammler-Verschlusses 32 wiederum ist ebenfalls ein Durchflusskanal 36 gebildet. Der Durchflusskanal 36 ist dabei zwischen einer der Umgebung U zugewandten Außenseite 33 (der Übersichtlichkeit halber nicht in Fig. 6, jedoch in Fig. 2 und 5 mit Bezugszeichen versehen) des automatischen Sammler-Verschlusses 32 und der Bodeneinheit 20 im Bereich der Eingangsöffnung 22 gebildet. Der Durchflusskanal 36 stellt eine Fluidverbindung von außen in die Sammelleitung 24 bereit. Dabei ist in diesem Fall unter der Richtungsbeschreibung von außen zu verstehen, dass die Fluidverbindung in die Sammelleitung hinein führt, und zwar konkret von dem Filterinnenraum 42 der vorgeschalteten Filterkartusche 40 heraus.

Dazu sind die beiden Öffnungen in Form der Ablauföffnung 48 der Filterkartusche 40 und der Eingangsöffnung 22 in die Bodeneinheit 20 in Übereinstimmung zueinander gebracht. Die Durchflusskanäle 36, 58 sind also ausgebildet, die gereinigte Flüssigkeit W von der Filterkartusche 40 in die Bodeneinheit 20 zu leiten (in Fig. 6 mit den gestrichelten Pfeilen gekennzeichnet). Die Durchflusskanäle 36, 58 werden automatisch ausgebildet, wenn die jeweiligen automatischen Verschlüsse (automatischer Filterkartuschen-Verschluss 50 und automatischer Sammler-Verschlusses 32) in ihre geöffneten Zustände versetzt werden. Andererseits werden die Durchflusskanäle 36, 58 wieder automatisch geschlossen, wenn die jeweiligen automatischen Verschlüsse (automatischer Filterkartuschen-Verschluss 50 und automatischer Sammler-Verschlusses 32) in ihre geschlossenen Zustände versetzt werden.

In den beschriebenen jeweiligen geschlossenen Zuständen wird schnell und effektiv ein Austritt von Kondensat bzw. gereinigter Flüssigkeit W aus der Filterkartusche 40 bzw. der Bodeneinheit 20 verhindert. Auf diese Weise kann der Wechsel von Filterkartuschen 40 besonders sauber, sprich ohne Tropfen und somit Verschmutzen der Bodeneinheit 20 der vorschlagsgemäßen Öl/Wasser-Trennvorrichtung 10 erfolgen. Besonders vorteilhaft ist dabei, dass die Ablauföffnung 48, und somit auch der in dem geöffneten Zustand des automatischen Filterkartuschen-Verschlusses 50 gebildete Durchflusskanal 58, in dem geschlossenen Zustand des automatischen Filterkartuschen-Verschlusses 50 derart verschlossen ist, dass die Außenseite 52 des automatischen Filterkartuschen-Verschlusses 50 in einem Außenbereich mit einer Innenfläche des Gehäuses 44 abdichtend in Wirkverbindung steht. Die Innenfläche des Gehäuses 44 ist die dem Filterinnenraum 42 zugewandte, bzw. der Umgebung U abgewandte Fläche. Der Außenbereich des automatischen Filterkartuschen-Verschlusses 50 ist bei einem beispielsweise im Wesentlichen rund ausgebildeten automatischen Filterkartuschen-Verschluss 50 der äußere Ringbereich des automatischen Filterkartuschen-Verschlusses 50.

Dies gilt analog für die Bodeneinheit 20 und das Zusammenwirken zwischen Eingangsöffnung 22 und automatischem Sammler-Verschluss 32. Besonders vorteilhaft ist die Eingangsöffnung 22, und somit auch der in dem geöffneten Zustand des automatischen Sammler-Verschlusses 32 gebildete Durchflusskanal 36, in dem geschlossenen Zustand des automatischen Sammler-Verschlusses 32 derart verschlossen, dass die Außenseite 33 des automatischen Sammler-Verschlusses 32 in einem Außenbereich mit einer Innenfläche der Bodeneinheit 20 abdichtend in Wirkverbindung steht. Die Innenfläche der Bodeneinheit 20 ist die der Sammelleitung 24 zugewandte, bzw. von der Umgebung U abgewandte Fläche. Der Außenbereich des automatischen Sammler-Verschlusses 32 ist bei einem beispielsweise im Wesentlichen rund ausgebildeten automatischen Sammler-Verschluss 32 der äußere Ringbereich des automatischen Sammler-Verschlusses 32.

Um ein möglichst einfaches Anschließen der Filterkartusche 40 an die Bodeneinheit 20 zu gewährleisten ist an einer Unterseite 47 der Filterkartusche 40 wenigstens ein Vorsprung 49 zur Positionierung der Filterkartusche 40 vorgesehen. Die Unterseite 47 der Filterkartusche 40 ist die zwecks Montage nach unten gewandte Seite. Die Ablauföffnung 48 ist dieser Unterseite 47 der Filterkartusche 40 zugeordnet. Durch die Ablauföffnung 48 ist eine Öffnungsebene E1 definiert, wie anhand der oberen strich-punktierten Linie in Fig. 5 a) ersichtlich. Der Vorsprung 49 ist gegenüber dieser Öffnungsebene E1 der Ablauföffnung 48 ausgebildet. Demnach ragt der Vorsprung gegenüber der Öffnungsebene E1 heraus und steht somit gegenüber der Ablauföffnung 48 weiter weg gegenüber dem wesentlichen Teil des Körpers der Filterkartusche 40 hervor. Der Vorsprung 49 ist hier als umlaufender Rand ausgebildet. Der Vorsprung 49 dient dem einfachen Einführen und Verbinden der Filterkartusche 40 mit der Bodeneinheit 20. Dies wird dadurch realisiert, dass der Vorsprung 49 zur Positionierung der Filterkartusche 40 in der zu dem Vorsprung 49 korrespondierenden Filteraufnahme 30 der Bodeneinheit 20 der Öl/Wasser-Trennvorrichtung 10 ausgebildet ist.

Hierzu weist die Filteraufnahme 30 der Bodeneinheit 20 eine Aussparung 31 auf. Diese Aussparung 31 ist zur Aufnahme des korrespondierenden Vorsprungs 49 der Filterkartusche 40 ausgebildet. In Fig. 6 ist der Zustand gezeigt, in dem der Vorsprung in die Aussparung 31 (in Fig. 6 nicht mit Bezugszeichen gekennzeichnet) aufgenommen ist. Die Aussparung 31 und der Vorsprung 49 bilden eine mechanische Schnittstelle zur Kopplung der Filterkartusche 40 mit der Bodeneinheit 20 aus. Hierdurch sind eine einfache und eindeutige Positionierung und somit eine einfache Montage möglich.

Die Eingangsöffnung 22, welche einer Oberseite 21 der Bodeneinheit zugeordnet ist (Fig. 2), definiert eine Öffnungsebene E2, wie in Fig. 5 anhand der unteren strich-punktierten Linie ersichtlich. Die Aussparung 31 ist an dieser Oberseite 21 der Bodeneinheit 20 ausgebildet, und zwar konkret innerhalb der Filteraufnahme 30. Dabei ist die Aussparung 31 umlaufend ausgebildet, um den als umlaufenden Rand ausgebildeten Vorsprung 49 aufnehmen zu können. Die Aussparung 31 ist gegenüber der Öffnungsebene E2 der Eingangsöffnung 22 zurückversetzt ausgebildet. Dadurch ragt die Aussparung 31 tiefer in den Grundkörper der Bodeneinheit 20 hinein als der somit gegenüber der Aussparung 31 herausragende Bereich der Eingangsöffnung 22. Eine einfache Montage der Filterkartusche 40 und eine stabile Verbindung zwischen Filterkartusche 40 und Bodeneinheit 20 werden auf diese Weise gewährleistet.

Die gesamte Anordnung der vorschlagsgemäßen Öl/Wasser-Trennvorrichtung 10 ist besonders gut in Fig. 2 bzw. alternativ auch in Fig. 8 zu erkennen. Die Öl/Wasser-Trennvorrichtung 10 umfasst in dem dargestellten Ausführungsbeispiel die unten angeordnete Bodeneinheit 20, die im Betrieb feststeht, und darüber mit der Bodeneinheit 20 verbundene Filterkartuschen 40, 40', 40". Konkret ist eine Vielzahl von vier Filterkartuschen 40, 40', 40" vorgesehen, wobei die linken drei Filterkartuschen 40, 40', 40" in die linken drei Filteraufnahmen 30 der Bodeneinheit 20 eingesetzt sind. Die am weitesten rechts angeordnete Filterkartusche 40 ist noch nicht in die rechte Filteraufnahme 30 eingesetzt, respektive gerade von dieser Filteraufnahme 30 demontiert worden.

Die linke Filterkartusche 40 ist mit der rechts benachbarten Filterkartusche 40' und diese wiederum mit der weiter rechts benachbarten Filterkartusche 40" verbunden. Konkret sind die Zulaufkanäle 41 (vgl. Fig. 3) der Filterkartuschen 40, 40', 40" miteinander verbunden. Ein jeder Zulaufkanal 41 ist bei der jeweiligen Filterkartusche 40, 40', 40" oben angeordnet. Er ist einer Oberseite 45 der Filterkartusche 40, 40', 40" zugeordnet. Ebenso ist auch die die Zulauföffnung 46 der Oberseite 45 der jeweiligen Filterkartusche 40, 40', 40" zugeordnet.

Der Zulaufkanal 41 ist oberhalb der Zulauföffnung 46 angeordnet und steht in Fluidverbindung mit der Zulauföffnung 46. Letztlich sorgt der Zulaufkanal 41 einerseits dafür, dass die zu reinigende Flüssigkeit L dem Filterinnenraum 42 zugeführt wird. Andererseits weist der Zulaufkanal 41 ferner eine Abzweigung 41' zum Weiterleiten eines Teils von der zu reinigenden Flüssigkeit L in die benachbarte Filterkartusche 40', 40" auf. Auf diese Weise kann die Vielzahl der Filterkartuschen 40, 40', 40" in der Öl/Wasser-Trennvorrichtung 10 parallelgeschaltet werden. Es wird dadurch ein Teil der zu reinigende Flüssigkeit L in der jeweiligen Filterkartusche 40 bzw. 40' gereinigt (vgl. die oben angeordneten, durchgezogene Pfeile in Fig. 2), sowie ein Teil in der jeweiligen benachbarten Filterkartusche 40' bzw. 40" gereinigt (vgl. die oben angeordneten, gestrichelten Pfeile in Fig. 2).

Bei den Filtereinheiten 4 in Form der Filterkartuschen 40, 40', 40" weist der Zulaufkanal 41 jeweils eine Eingangsöffnung 46' bzw. 46" zum initialen Eintreten der zu reinigende Flüssigkeit L in die Filterkartusche 40 bzw. in die benachbarte Filterkartusche 40', 40" auf. Hierüber wird die zu reinigende Flüssigkeit L initial in Bezug auf die jeweilige Filterkartusche 40, 40', 40" eingeleitet. Ein Teil wird wie beschrieben über die jeweilige Zulauföffnung 46 sodann dem Filterinnenraum 42 zur Filterung in der jeweiligen Filterkartusche 40 selbst weitergeleitet, während ein anderer Teil in die parallelgeschaltete, benachbarte Filterkartusche 40', 40" weitergeleitet wird. Hierzu weist der Zulaufkanal 41 die besagte Abzweigung 41' sowie eine diese Abzweigung 41' abschließende Abzweigungsöffnung 48' auf. Die Abzweigungsöffnung 48' ist zum Weiterleiten eines Teils von der zu reinigenden Flüssigkeit L aus der Filterkartusche 40 heraus in die benachbarte Filterkartusche 40', 40" eingerichtet.

Dazu ist die Abzweigungsöffnung 48' einer Filterkartusche 40 in Übereinstimmung mit der Eingangsöffnung 46" einer benachbarten Filterkartusche 40' gebracht, wie in Fig. 2 angedeutet ist. Die Abzweigungsöffnung 48' ist zum fluiddichten Verbinden mit der Eingangsöffnung 46" einer benachbarte Filterkartusche 40', 40" ausgebildet.

Die Abzweigungsöffnung 48' ist ferner zwischen einem geöffneten Zustand und einem geschlossenen Zustand wechselbar ausgebildet ist. Dies gilt grundsätzlich auch für die Eingangsöffnungen 46', 46". In Fig. 2 ist beispielsweise der Zulaufkanal 41 der rechten der drei angeschlossenen Filterkartuschen 40" nur hinsichtlich seines Zugangs in Form der Eingangsöffnung 46" geöffnet, hinsichtlich seiner Abzweigungsöffnung 48' jedoch geschlossen. Die noch einzusetzende bzw. gerade demontierte Filterkartusche 40, die ganz rechts in Fig. 2 dargestellt ist, ist sogar sowohl bezüglich der Eingangsöffnung 46' als auch bezüglich der Abzweigungsöffnung 48' verschlossen.

Durch die Parallelschaltung mehrerer Filterkartuschen 40, 40', 40" wird vorteilhaft erreicht, dass Kondensat nicht aufwendig aufgefangen werden muss, wenn einmal eine auszutauschende Filterkartusche 40 gewechselt wird. Vielmehr kann der Betrieb der vorschlagsgemäßen Öl/Wasser-Trennvorrichtung 10 mit den verbleibenden verbundenen Filterkartuschen 40 weitergeführt werden. Außerdem kann vorteilhaft auf flexible Belastungssituationen reagiert werden. So kann auf größere Verschmutzungen der zu reinigenden Flüssigkeit L dadurch reagiert werden, dass die Bodeneinheit 20 der vorschlagsgemäßen Öl/Wasser-Trennvorrichtung 10 mit mehreren Filterkartuschen 40, 40', 40" belegt wird, während bei einem weniger belastendem Betrieb bzw. weniger belastenden Rahmenbedingungen einzelne Filteraufnahmen 30 der Bodeneinheit frei von Filterkartuschen 40 bleiben können. Filterkartuschen können also einfach hinzugefügt oder weggelassen werden, um die Leistung des Systems an den tatsächlichen Kondensatanfall anzupassen.

Bei Belegung der Filterkartuschen 40, 40', 40" mit zu vielen Ölpartikeln, also wenn eine Filterkartusche nicht mehr brauchbar ist, können diese vereinzelt ausgetauscht werden. Es muss nicht etwa die gesamte Öl/Wasser-Trennvorrichtung 10 oder die Bodeneinheit 20 mit ausgetauscht werden. Da nur die Filterkartuschen ausgewechselt werden, nicht etwa der Sammler, werden Ressourcen geschont.

Durch die parallele Durchströmung der Filterkartuschen 40, 40', 40" sinkt der Durchflusswiderstand des Gesamtsystems, d.h. bei gleichem Differenzdruck wird mehr Kondensat verarbeitet. Die Filterkartuschen 40, 40', 40" sind so ausgeführt, dass sie vom Gewicht und von der Größe her einfach ohne Hilfsmittel von einer Serviceperson getragen werden können, wodurch der Service erleichtert wird.

Die Filterkartuschen 40, 40', 40" der vorschlagsgemäßen Öl/Wasser-Trennvorrichtung 10 münden in eine gemeinsame Sammelleitung 24. Hier wird die von allen angeschlossenen Filterkartuschen 40, 40', 40" gereinigte Flüssigweit W in der Bodeneinheit 20 gesammelt. Von dort aus wird sie weitergeleitet an die eine gemeinsame Steigleitung 26. Die Sammelleitung 24 mündet hierzu in die gemeinsame Steigleitung 26. Die abschließend angeordnete Auslassöffnung 28, also der Auslass der vorschlagsgemäßen Öl-/Wasser-Trennvorrichtung 10, liegt relativ zu den Filterkartuschen 40, 40', 40", und zwar konkret relativ zu deren Ablauföffnungen 48, erhöht und beinhaltet ein Speichervolumen. Dadurch kann abhängig von der Betriebsart des Gesamtsystems nach einem Ableitvorgang ein kleiner Teil des aufbereiteten Wassers W zurück in die Filterkartuschen 40, 40', 40" fließen. Diese umgekehrte Durchströmung führt zu einer Dynamisierung des Filterbettes und wirkt damit einer Verblockung durch Verschleimung entgegen. Die Steigleitung 26 hat dabei grundsätzlich die Funktion, dass die Filter der Filterkartuschen 40, 40', 40" mit Kondensat benetzt bleiben und nicht trockenfallen.

Die erfolgte Beschreibung kann auch im Wesentlichen auf das Ausführungsbeispiel der Öl/Wasser-Trennvorrichtung 10 in Fig. 8 übertragen werden. Im Unterschied zum Ausführungsbeispiel gemäß Fig. 2 sind bei der Öl/Wasser-Trennvorrichtung 10 in Fig. 8 lediglich vier Filterkartuschen 40 gemäß Fig. 7 vorgesehen, anstatt wie bei der Fig. 2 die Filterkartuschen 40 gemäß Fig. 3. Die Filterkartuschen 40 gemäß Fig. 7 und somit auch die Öl/Wasser-Trennvorrichtung 10 in Fig. 8 unterscheiden sich durch die Ausgestaltung der Oberseiten 45 der Filterkartuschen 40. Hier sind ebenfalls automatische Verschlüsse vorgesehen, und zwar zum einen die automatischen Zulauf-Verschlüsse 61', die die jeweilige Eingangsöffnung 46' in den Zulaufkanal 41 automatisch verschließen und öffnen können. Zum anderen sind jeweils automatische Abzweigungs-Verschlüsse 62' vorgesehen, die die jeweilige Abzweigungsöffnung 48' in die benachbarte Filterkartusche 40', 40" automatisch verschließen und öffnen können. Die Funktionsweise ist gleicht dabei den zuvor beschriebenen automatischen Verschlüssen in Form des automatischen Sammler-Verschlusses 32 bzw. des automatischen Filterkartuschen-Verschlusses 50, weshalb auf die Beschreibung verwiesen warden kann. Ferner sind auch jeweils Federn 61 bzw. 62 vorgesehen, die den automatischen Zulauf-Verschluss 61' bzw. den automatischen Abzweigungs-Verschluss 62' auf analoge Weise in den geschlossenen Zustand drängen können.

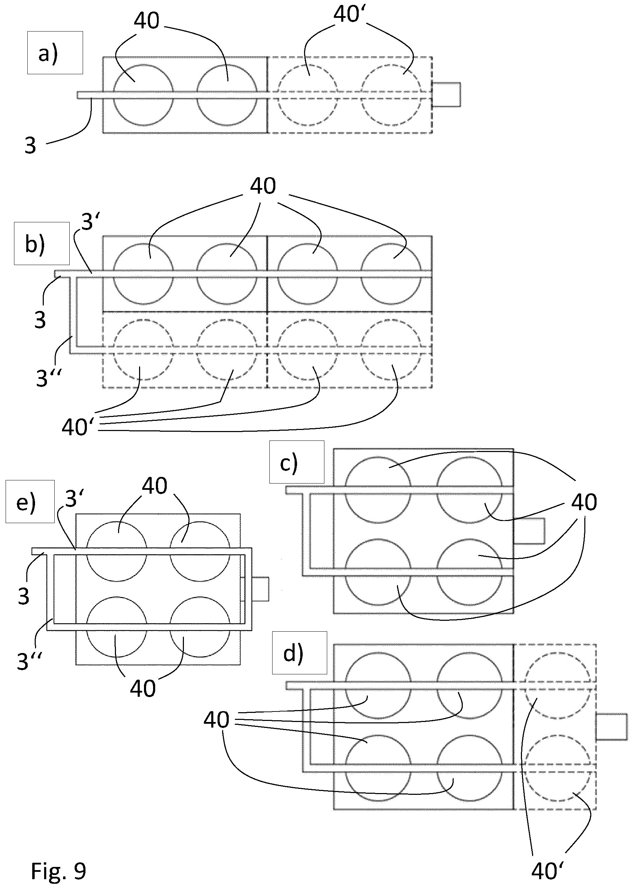

Die Bodeneinheit 20 weist in dem in Fig. 2, 4, 5, 6 und 8 dargestellten Fall vier Stellplätze bzw. Filteraufnahmen 30 für Filterkartuschen 40, 40', 40" auf. Grundsätzlich ist die vorschlagsgemäße Bodeneinheit 20 flexibel. Die Bodeneinheit 20 ist erweiterbar. In Fig. 9 sind in den Ansichten a), b), c), d) und e) fünf verschiedene Fälle schematisch dargestellt. Gemäß Ansicht a) werden an zwei bereits in Reihe benachbart angeordnete Filterkartuschen 40 zwei weitere in Reihe benachbart angeordnete Filterkartuschen 40' angereiht (gestrichelt gekennzeichnet). Die Anordnung nach Ansicht b) entspricht im Wesentlichen der Anordnung gemäß Ansicht a), wobei an die vier in Reihe benachbart angeordneten Filterkartuschen 40, 40' vier weitere Filterkartuschen 40, 40'parallel hierzu angereiht werden. Gemäß Ansicht c) sind vier Filterkartuschen 40 in einem 2x2-Block angeordnet. Gemäß Ansicht d) wird dieser 2x2-Block von vier Filterkartuschen 40 nach Ansicht c noch um zwei weitere Filterkartuschen 40' ergänzt. In allen Darstellungen gemäß Fig. 9 sind die Filterkartuschen 40, 40'in ihrer Gesamtheit parallelgeschaltet, sodass vereinzelt Filterkartuschen 40, 40' auf die beschriebene Weise ohne Probleme ausgetauscht oder gar abgeschlossen werden können. In den genannten Ansichten b), c) und d) teilt sich der Zulaufkanal 3 in zwei Abzweigungen 3' und 3" auf. Grundsätzlich ist das System sehr flexibel, da beispielsweise einzelne Filterkartuschen 40 bzw. 40' von dem Zulaufkanal 3 bzw. einer Abzweigung 3' oder 3" abgekoppelt werden können. In vorteilhafter Weise kann dies auch bevorzugt erfolgen, ohne dass das gesamte System angehalten und der Filtervorgang gestoppt werden müsste. Besonders flexibel ist auch das System gemäß Ansicht e) ausgestaltet, bei der sich zwar ebenfalls der Zulaufkanal 3 in die beiden Abzweigungen 3' und 3" aufteilt, diese jedoch als Ringleitung ausgebildet ist.

Grundsätzlich ist es zwar möglich, aber nicht erforderlich, dass einzelne Filterkartuschen 40, 40' im Betrieb ausgewechselt werden.

Bei Öl/Wasser-Trennvorrichtungen 10 mit mehreren Filterkartuschen 40, 40', 40" werden bevorzugt grundsätzlich baugleiche Filterkartuschen 40, 40', 40" als benachbarte Filterkartuschen eingesetzt.

### Bezugszeichenliste

- 1: Öl/Wasser-Trennvorrichtung
- 2: Eingangsöffnung
- 3: Zulaufkanal
- 3', 3": Abzweigung (des Zulaufkanals 3)
- 4: Filtereinheit
- 5: Filterinnenraum
- 6: Gehäuse
- 7: Zulauföffnung
- 8: Adsorptionsfiltermaterial
- 9: Sammelleitung
- 10: Öl/Wasser-Trennvorrichtung
- 20: Bodeneinheit
- 21: Oberseite
- 22: Eingangsöffnung (in die Sammelleitung 24 der Bodeneinheit 20)
- 24: Sammelleitung
- 26: Steigleitung
- 28: Auslassöffnung
- 30: Filteraufnahme
- 31: Aussparung
- 32: automatische Sammler-Verschluss
- 33: Außenseite (des automatischen Sammler-Verschlusses 32)
- 34: Innenseite (des automatischen Sammler-Verschlusses 32)
- 35: Sammler-Anschlagsfläche
- 36: Durchflusskanal
- 40: Filterkartusche
- 40', 40": benachbarte Filterkartuschen
- 41: Zulaufkanal
- 41': Abzweigung
- 42: Filterinnenraum
- 43: Adsorptionsfiltermaterial
- 44: Gehäuse
- 45: Oberseite
- 46: Zulauföffnung
- 46': Eingangsöffnung (in den Zulaufkanal 41)
- 46": Eingangsöffnung (einer benachbarte Filterkartusche 40', 40")
- 47: Unterseite
- 48: Ablauföffnung
- 48': Abzweigungsöffnung
- 49: Vorsprung
- 50: automatischer Filterkartuschen-Verschluss
- 52: Außenseite (des automatischen Filterkartuschen-Verschlusses 50)
- 53: Filterkartuschen-Anschlagsfläche
- 54: Innenseite (des automatischen Filterkartuschen-Verschlusses 50)
- 56: Freiraum
- 58: Durchflusskanal
- 60, 61, 62, 63: Feder
- 61': automatischer Zulauf-Verschluss
- 62': automatischer Abzweigungs-Verschluss

- L: zu reinigende Flüssigkeit (Öl/Wasser-Gemisch / verschmutztes Kondensat)
- W: gereinigte Flüssigkeit (gereinigtes Kondensat / im Wesentlichen ölfreies Wasser)
- U: Umgebung
- O1, O2: Öffnungskraft
- C1, C2: Schließkraft
- E1: Öffnungsebene (der Ablauföffnung 48 der Filterkartusche 40)
- E2: Öffnungsebene (der Eingangsöffnung 22 der Bodeneinheit 20)
- E3: Unterseiten-Ebene (der Filterkartusche 40)

## Patentansprüche

1. Filtereinheit (4) zur Integration in eine Öl/Wasser-Trennvorrichtung (10) zum Entfernen ölhaltiger Bestandteile aus einem Öl/Wasser-Gemisch in Form von Kondensat aus einem Druckluftprozess, wobei die Filtereinheit (4) ein einen Filterinnenraum (42) von einer Umgebung (U) trennendes Gehäuse (44) aufweist, wobei in dem Filterinnenraum (42) Filtermaterial zum wenigstens teilweise Entfernen von Öl aus dem Öl/Wasser-Gemisch in Form von Kondensat aus einem Druckluftprozess, vorzugsweise Adsorptionsfiltermaterial (43) zur Adsorption von dispergiertem Öl, angeordnet ist, wobei eine Zulauföffnung (46) zum Bereitstellen eines Zulaufs von zu reinigender Flüssigkeit (L) in den Filterinnenraum (42) vorgesehen ist und wobei das Gehäuse (44) stromabwärts des Filtermaterials eine Ablauföffnung (48) zum Bereitstellen eines Ablaufs von gereinigter Flüssigkeit (W) aus dem Filterinnenraum (42) aufweist, **dadurch gekennzeichnet, dass** die Filtereinheit (4) als Filterkartusche (40) zum lösbaren Anschließen an die und zur erneuten Demontage von der Öl/Wasser-Trennvorrichtung (10) ausgebildet ist, **dass** die Ablauföffnung (48) des Gehäuses (44) mittels eines automatischen Filterkartuschen-Verschlusses (50) verschließbar eingerichtet ist, wobei der automatische Filterkartuschen-Verschluss (50) derart durch ein Einsetzen der Filterkartusche (40) in eine korrespondierende Filteraufnahme (30) einer Bodeneinheit (20) der Öl/Wasser-Trennvorrichtung (10) von einem geschlossenen Zustand zum Verhindern des Ablaufs von gereinigter Flüssigkeit (W) aus dem Filterinnenraum (42) in einen geöffneten Zustand zum Ermöglichen des Ablaufs von gereinigter Flüssigkeit (W) aus dem Filterinnenraum (42) versetzbar ausgebildet ist, dass es keinem aktiven Öffnen des Filterkartuschen-Verschlusses durch einen Anwender bedarf,
**dass** der automatische Filterkartuschen-Verschluss (50) derart eingerichtet ist, dass eine Schließkraft (C1), die auf eine dem Filterinnenraum (42) zugewandte Innenseite (54) des automatischen Filterkartuschen-Verschlusses (50) gerichtet ist, den automatischen Filterkartuschen-Verschluss (50) von dem geöffneten Zustand in den geschlossenen Zustand versetzt,
**und dass** die in dem Filterinnenraum (42) befindliche zu reinigende Flüssigkeit bzw. gereinigte Flüssigkeit die Schließkraft (C1) auf die Innenseite (54) des automatischen Filterkartuschen-Verschlusses (50) wenigstens teilweise ausübt.

2. Filtereinheit (4) nach Anspruch 1, **dadurch gekennzeichnet, dass** der automatische Filterkartuschen-Verschluss (50) derart eingerichtet ist, dass eine Öffnungskraft (O1), die auf eine der Umgebung (U) zugewandte Außenseite (52) des automatischen Filterkartuschen-Verschlusses (50), und insbesondere in Richtung des Filterinnenraums (42), gerichtet ist, den automatischen Filterkartuschen-Verschluss (50) von dem geschlossenen Zustand in den geöffneten Zustand versetzt.

3. Filtereinheit (4) nach Anspruch 1 oder 2, **dadurch gekennzeichnet, dass** eine Filterkartuschen-Anschlagsfläche (53) zur Anlage gegen eine stromabwärts angeordnete Komponente der Öl/Wasser-Trennvorrichtung (10) während des Betriebs der Öl/Wasser-Trennvorrichtung (10) vorgesehen ist, vorzugsweise, dass die Filterkartuschen-Anschlagsfläche (53) gegenüber einer Unterseiten-Ebene (E3) der Filterkartusche (40) zurückversetzt ist, weiter vorzugsweise, dass eine durch die Ablauföffnung (48) definierte Öffnungsebene (E1) gegenüber der Filterkartuschen-Anschlagsfläche (53) zurückversetzt ist.

4. Filtereinheit (4) nach einem der vorhergehenden Ansprüche, **dadurch gekennzeichnet, dass** die Filterkartuschen-Anschlagsfläche (53) auf einer der Umgebung (U) zugewandten Außenseite (52) des automatischen Filterkartuschen-Verschlusses (50) ausgebildet ist.

5. Filtereinheit (4) nach einem der vorhergehenden Ansprüche, **dadurch gekennzeichnet, dass** der automatische Filterkartuschen-Verschluss (50) zwischen dem geöffneten Zustand zum Ermöglichen des Ablaufs von gereinigter Flüssigkeit (W) aus dem Filterinnenraum (42) und dem geschlossenen Zustand zum Verhindern des Ablaufs von gereinigter Flüssigkeit (W) aus dem Filterinnenraum (42) wechselbar ausgebildet ist.

6. Filtereinheit (4) nach einem der vorhergehenden Ansprüche, **dadurch gekennzeichnet, dass** die Schließkraft (C1) auf die dem Filterinnenraum (42) zugewandte Innenseite (54) des automatischen Filterkartuschen-Verschlusses (50) und in Richtung der Umgebung (U) gerichtet ist.

7. Filtereinheit (4) nach einem der vorhergehenden Ansprüche, **dadurch gekennzeichnet, dass** eine Feder (60) an die Innenseite (54) des automatischen Filterkartuschen-Verschlusses (50) anschließend angeordnet ist und die Schließkraft (C1) auf die Innenseite (54) des automatischen Filterkartuschen-Verschlusses (50) wenigstens teilweise ausübt.

8. Filtereinheit (4) nach einem der vorhergehenden Ansprüche, **dadurch gekennzeichnet, dass**, in dem geöffneten Zustand des automatischen Filterkartuschen-Verschlusses (50), ein Durchflusskanal (58) zwischen einer der Umgebung (U) zugewandten Außenseite (52) des automatischen Filterkartuschen-Verschlusses (50) und dem Gehäuse (44) im Bereich der Ablauföffnung (48) gebildet ist, wobei der Durchflusskanal (48) eine Fluidverbindung vom Filterinnenraum (42) nach außen bereitstellt.

9. Filtereinheit (4) nach einem der vorhergehenden Ansprüche, **dadurch gekennzeichnet, dass** die Ablauföffnung (48), und insbesondere der in dem geöffneten Zustand des automatischen Filterkartuschen-Verschlusses (50) gebildete Durchflusskanal (58), in dem geschlossenen Zustand des automatischen Filterkartuschen-Verschlusses (50) derart verschlossen ist, dass eine der Umgebung (U) zugewandte Außenseite (52) des automatischen Filterkartuschen-Verschlusses (50) in einem Außenbereich mit einer dem Filterinnenraum (42) zugewandten Innenfläche des Gehäuses (44) abdichtend in Wirkverbindung steht.

10. Filtereinheit (4) nach einem der vorhergehenden Ansprüche, **dadurch gekennzeichnet, dass** die Zulauföffnung (46) einer Oberseite (45) der Filterkartusche (40) und die Ablauföffnung (48) einer Unterseite (47) der Filterkartusche (40) zugeordnet ist, und dass ein Zulaufkanal (41) vorgesehen ist, wobei der Zulaufkanal (41) oberhalb der Zulauföffnung (46) angeordnet ist und in Fluidverbindung mit der Zulauföffnung (46) steht, und wobei der Zulaufkanal (41) ferner eine Abzweigung (41') zum Weiterleiten eines Teils von der zu reinigenden Flüssigkeit (L) in eine benachbarte Filterkartusche (40', 40") aufweist.

11. Filtereinheit (4) nach einem der vorhergehenden Ansprüche, **dadurch gekennzeichnet, dass** der Zulaufkanal (41) eine Eingangsöffnung (46') zum initialen Eintreten der zu reinigende Flüssigkeit (L) in die Filterkartusche (40) und eine Abzweigungsöffnung (48') zum Weiterleiten eines Teils von der zu reinigenden Flüssigkeit (L) aus der Filterkartusche (40) heraus in eine benachbarte Filterkartusche (40', 40") aufweist, wobei die Abzweigungsöffnung (48') zwischen einem geöffneten Zustand und einem geschlossenen Zustand wechselbar ausgebildet ist, vorzugsweise, dass die AbzweigungsÖffnung (48') zum fluiddichten Verbinden mit einer Eingangsöffnung (46") einer benachbarte Filterkartusche (40', 40") ausgebildet ist.

12. Filtereinheit (4) nach einem der vorhergehenden Ansprüche, **dadurch gekennzeichnet, dass** die Ablauföffnung (48) einer Unterseite (47) der Filterkartusche (40) zugeordnet und durch die Ablauföffnung (48) eine Öffnungsebene (E1) definiert ist, und dass das Gehäuse (44) an der Unterseite (47) wenigstens einen, vorzugsweise als umlaufenden Rand ausgebildeten, Vorsprung (49) gegenüber der Öffnungsebene (E1) der Ablauföffnung (48) zur Positionierung der Filterkartusche (40) in einer zu dem Vorsprung (49) korrespondierenden Filteraufnahme (30) der Öl/Wasser-Trennvorrichtung (10) aufweist.

13. Bodeneinheit (20) einer Öl/Wasser-Trennvorrichtung (10) zum Entfernen ölhaltiger Bestandteile aus einem Öl/Wasser-Gemisch aus Kondensat aus einem Druckluftprozess, wobei eingangsseitig wenigstens eine Eingangsöffnung (22) zum Einleiten von in einer vorgeschalteten Filtereinheit (4) nach einem der Ansprüche 1 bis 12 gereinigter Flüssigkeit (W) vorgesehen ist, wobei eine Sammelleitung (24) zum Weiterleiten der gereinigten Flüssigkeit (W) vorgesehen ist, wobei die Eingangsöffnung (22) einen Zugang für die gereinigte Flüssigkeit (W) in die Sammelleitung (24) bereitstellt, und wobei eine Steigleitung (26) vorgesehen ist, wobei die Steigleitung (26) mit der Sammelleitung (24) in Fluidverbindung steht und zum Ableiten der gereinigten Flüssigkeit (W) über eine stromabwärts vorgesehene Auslassöffnung (28) eingerichtet ist, **dadurch gekennzeichnet, dass** wenigstens eine Filteraufnahme (30) vorgesehen ist, wobei die Filteraufnahme (30) zum lösbaren Anschließen und zur erneuten Demontage der vorgeschalteten Filtereinheit (4) in Form einer Filterkartusche (40) eingerichtet ist, **und dass** die Eingangsöffnung (22) im Bereich der Filteraufnahme (30) angeordnet und mittels eines automatischen Sammler-Verschlusses (32) verschließbar eingerichtet ist, wobei der automatische Sammler-Verschluss (32) die Sammelleitung (24) von einer Umgebung (U) trennt und von einem geschlossenen Zustand zum Verschließen einer Fluidverbindung zwischen der Sammelleitung (24) und der Umgebung (U) in einen geöffneten Zustand zum Ermöglichen des Einleitens der in der vorgeschalteten Filtereinheit (4) gereinigten Flüssigkeit (W) versetzbar ausgebildet ist.

14. Bodeneinheit (20) nach Anspruch 13, **dadurch gekennzeichnet, dass** mindestens zwei Filteraufnahmen (30) zum lösbaren Anschließen und zur erneuten Demontage von mindestens zwei Filterkartuschen (40) vorgesehen sind.

15. Bodeneinheit (20) nach Anspruch 13 oder 14, **dadurch gekennzeichnet, dass** der automatische Sammler-Verschluss (32) derart eingerichtet ist, dass eine Öffnungskraft (O2), die auf eine der Umgebung (U) zugewandte Außenseite (33) des automatischen Sammler-Verschlusses (32), und insbesondere in Richtung der Sammelleitung (24), gerichtet ist, den automatischen Sammler-Verschluss (32) von dem geschlossenen Zustand in den geöffneten Zustand versetzt, vorzugsweise, dass der automatische Sammler-Verschluss (32) derart eingerichtet ist, dass eine Schließkraft (C2), die auf eine der Sammelleitung (24) zugewandte Innenseite (34) des automatischen Sammler-Verschlusses (32), und insbesondere in Richtung der Umgebung (U), gerichtet ist, den automatischen Sammler-Verschluss (32) von dem geöffneten Zustand in den geschlossenen Zustand versetzt.

16. Bodeneinheit (20) nach einem der vorhergehenden Ansprüche, **dadurch gekennzeichnet, dass** eine Feder (63) an die Innenseite (34) des automatischen Sammler-Verschlusses (32) anschließend angeordnet ist und die Schließkraft (C2) auf die Innenseite (34) des automatischen Sammler-Verschlusses (32) wenigstens teilweise ausübt, und/oder dass die in der Sammelleitung (24) befindliche gereinigte Flüssigkeit (W) die Schließkraft (C2) auf die Innenseite (34) des automatischen Sammler-Verschlusses (32) wenigstens teilweise ausübt.

17. Bodeneinheit (20) nach einem der vorhergehenden Ansprüche, **dadurch gekennzeichnet, dass**, in dem geöffneten Zustand des automatischen Sammler-Verschlusses (32), ein Durchflusskanal (36) zwischen einer der Umgebung (U) zugewandten Außenseite (33) des automatischen Sammler-Verschlusses (32) und der Bodeneinheit (20) im Bereich der Eingangsöffnung (22) gebildet ist, welcher Durchflusskanal (36) eine Fluidverbindung von außen in die Sammelleitung (24) bereitstellt.

18. Bodeneinheit (20) nach einem der vorhergehenden Ansprüche, **dadurch gekennzeichnet, dass** die Eingangsöffnung (22) einer Oberseite (21) der Bodeneinheit (20) zugeordnet und durch die Eingangsöffnung (22) eine Öffnungsebene (E2) definiert ist, und dass die Oberseite (21) wenigstens eine, vorzugsweise umlaufend ausgebildete, Aussparung (31) aufweist, wobei die Aussparung (31) gegenüber der Öffnungsebene (E2) der Eingangsöffnung (31) zur Aufnahme einer Filterkartusche (40) mit wenigstens einem zu der Aussparung (31) korrespondierenden Vorsprung (49) zurückversetzt ausgebildet ist.

19. Bodeneinheit (20) nach einem der vorhergehenden Ansprüche, **dadurch gekennzeichnet, dass** der automatischen Sammler-Verschluss (32) zwischen dem geöffneten Zustand zum Ermöglichen des Einleitens der in der vorgeschalteten Filtereinheit (4) gereinigten Flüssigkeit (W) und dem geschlossenen Zustand zum Verschließen einer Fluidverbindung zwischen der Sammelleitung (24) und der Umgebung (U) wechselbar ausgebildet ist.

20. Öl/Wasser-Trennvorrichtung (10) zum Entfernen ölhaltiger Bestandteile aus einem Öl/Wasser-Gemisch aus einem aus einem Druckluftprozess stammenden Kondensat **gekennzeichnet durch** eine Bodeneinheit (20) nach einem der Ansprüche 13 bis 19, wobei wenigstens eine Filtereinheit (4) in Form einer Filterkartusche (40, 40', 40") nach einem der vorhergehenden Ansprüche vorgesehen ist, wobei die Filterkartusche (40, 40', 40") derart mit der Filteraufnahme (30) korrespondiert, dass, wenn die Filterkartusche (40, 40', 40") in der Filteraufnahme (30) aufgenommen ist, der automatische Filterkartuschen-Verschluss (50) und der automatische Sammler-Verschluss (32) derart aufeinander stoßen, dass dadurch sowohl der automatische Filterkartuschen-Verschluss (50) als auch der automatische Sammler-Verschluss (32) jeweils in den geöffneten Zustand versetzt sind.

21. Öl/Wasser-Trennvorrichtung (10) nach Anspruch 20, **dadurch gekennzeichnet, dass** eine Vielzahl der Filterkartuschen (40, 40', 40") vorgesehen ist, wobei die Vielzahl der Filterkartuschen (40, 40', 40") parallelgeschaltet ist und die Filterkartuschen (40, 40', 40") mit ihren Ablauföffnungen (48) jeweils in die Sammelleitung (24) als eine gemeinsame Sammelleitung der Öl/Wasser-Trennvorrichtung (10) münden und diese gemeinsame Sammelleitung wiederum in die Steigleitung (26) als eine gemeinsame Steigleitung der Öl/Wasser-Trennvorrichtung (10) mündet.

## Claims

1. A filter unit (4) for integration into an oil-water-separating device (10) for removing oil-containing components from an oil-water mixture in the form of condensate from a compressed-air process, wherein the filter unit (4) has a housing (44) separating a filter interior (42) from an environment (U), wherein filter material for at least partially removing oil from the oil-water mixture in the form of condensate from a compressed air process, preferably adsorption filter material (43) for adsorbing dispersed oil, is arranged in the filter interior (42), wherein an inflow opening (46) is provided for providing an inflow of liquid (L) to be purified into the filter interior (42), and wherein the housing (44) has an outflow opening (48) downstream of the filter material for providing an outflow of purified liquid (W) from the filter interior (42), **characterized in that** the filter unit (4) is designed as a filter cartridge (40) for detachably connecting to and disassembling again from the oil-water-separating device (10),
**in that** the outflow opening (48) of the housing (44) is configured to be closable by means of an automatic filter cartridge closure (50), wherein the automatic filter cartridge closure (50) is designed to be movable from a closed state for preventing the outflow of purified liquid (W) from the filter interior (42) to an open state for allowing the outflow of purified liquid (W) from the filter interior (42) in such a manner, that by inserting the filter cartridge (40) into a corresponding filter receptacle (30) of a base unit (20) of the oil-water-separating device (10), no active opening of the filter cartridge closure by a user is required,
**in that** the automatic filter cartridge closure (50) is configured in such a manner that a closing force (C1), which is directed onto an inner side (54) of the automatic filter cartridge closure (50) facing the filter interior (42), moves the automatic filter cartridge closure (50) from the open state to the closed state,
**and in that** the liquid to be purified or purified liquid present in the filter interior (42) at least partially exerts the closing force (C1) onto the inner side (54) of the automatic filter cartridge closure (50).

2. The filter unit (4) according to claim 1, **characterized in that** the automatic filter cartridge closure (50) is configured in such a manner that an opening force (O1), which is directed onto an outer side (52) of the automatic filter cartridge closure (50) facing the environment (U), and in particular in the direction of the filter interior (42), moves the automatic filter cartridge closure (50) from the closed state to the open state.

3. The filter unit (4) according to claim 1 or 2, **characterized in that** a filter cartridge contact surface (53) is provided to rest against a downstream component of the oil-water-separating device (10) during operation of the oil-water-separating device (10), preferably **in that** the filter cartridge contact surface (53) is set back with respect to a bottom-side plane (E3) of the filter cartridge (40), further preferably **in that** an opening plane (E1) defined by the outflow opening (48) is set back with respect to the filter cartridge contact surface (53).

4. The filter unit (4) according to any one of the preceding claims, **characterized in that** the filter cartridge contact surface (53) is formed on an outer side (52) of the automatic filter cartridge closure (50) facing the environment (U).

5. The filter unit (4) according to any one of the preceding claims, **characterized in that** the automatic filter cartridge closure (50) is designed to be changeable between the open state for allowing the outflow of purified liquid (W) from the filter interior (42) and the closed state for preventing the outflow of purified liquid (W) from the filter interior (42).

6. The filter unit (4) according to any one of the preceding claims, **characterized in that** the closing force (C1) is directed onto the inner side (54) of the automatic filter cartridge closure (50) facing the filter interior (42) and in the direction of the environment (U).

7. The filter unit (4) according to any one of the preceding claims, **characterized in that** a spring (60) is arranged adjacent to the inner side (54) of the automatic filter cartridge closure (50) and at least partially exerts the closing force (C1) onto the inner side (54) of the automatic filter cartridge closure (50).

8. The filter unit (4) according to any one of the preceding claims, **characterized in that**, in the open state of the automatic filter cartridge closure (50), a flow channel (58) is formed between an outer side (52) of the automatic filter cartridge closure (50) facing the environment (U) and the housing (44) in the region of the outflow opening (48), wherein the flow channel (48) provides a fluid connection from the filter interior (42) to the outside.

9. The filter unit (4) according to any one of the preceding claims, **characterized in that** the outflow opening (48), and in particular the flow channel (58) formed in the open state of the automatic filter cartridge closure (50), is closed in the closed state of the automatic filter cartridge closure (50) in such a manner that in an outer region, an outer side (52) of the automatic filter cartridge closure (50) facing the environment (U) is operatively connected in a sealing manner to an inner surface of the housing (44) facing the filter interior (42).

10. The filter unit (4) according to any one of the preceding claims, **characterized in that** the inflow opening (46) is assigned to a top side (45) of the filter cartridge (40) and the outflow opening (48) is assigned to a bottom side (47) of the filter cartridge (40), and **in that** an inflow channel (41) is provided, wherein the inflow channel (41) is arranged above the inflow opening (46) and is in fluid connection with the inflow opening (46), and wherein the inflow channel (41) further has a junction (41') for transferring a portion of the liquid (L) to be purified into an adjacent filter cartridge (40', 40").

11. The filter unit (4) according to any one of the preceding claims, **characterized in that** the inflow channel (41) has an inlet opening (46') for the initial entry of the liquid (L) to be purified into the filter cartridge (40) and a junction opening (48') for transferring a portion of the liquid (L) to be purified out of the filter cartridge (40) and into an adjacent filter cartridge (40', 40"), wherein the junction opening (48') is designed to be changeable between an open state and a closed state, preferably **in that** the junction opening (48') is designed for fluid-tight connection to an inlet opening (46") of an adjacent filter cartridge (40', 40").

12. The filter unit (4) according to any one of the preceding claims, **characterized in that** the outflow opening (48) is assigned to a bottom side (47) of the filter cartridge (40) and an opening plane (E1) is defined by the outflow opening (48), and **in that** the housing (44) on the bottom side (47) has at least one projection (49), preferably in the form of a circumferential edge, with respect the opening plane (E1) of the outflow opening (48) for positioning the filter cartridge (40) in a filter receptacle (30) corresponding to the projection (49) of the oil-water-separating device (10).

13. A base unit (20) of an oil-water-separating device (10) for removing oil-containing components from an oil-water mixture of condensate from an compressed-air process, wherein at least one inlet opening (22) is provided on the inlet side for introducing liquid (W) purified in an upstream filter unit (4) according to any one of claims 1 to 12, wherein a manifold (24) is provided for transferring the purified liquid (W), wherein the inlet opening (22) provides an access for the purified liquid (W) into the manifold (24), and wherein a riser (26) is provided, wherein the riser (26) is in fluid connection with the manifold (24) and is configured for discharging the purified liquid (W) via an outlet opening (28) provided downstream, **characterized in that** at least one filter receptacle (30) is provided, wherein the filter receptacle (30) is configured for detachably connecting and for disassembling again the upstream filter unit (4) in the form of a filter cartridge (40), **and in that** the inlet opening (22) is arranged in the region of the filter receptacle (30) and is configured to be closable by means of an automatic collector closure (32), wherein the automatic collector closure (32) separates the manifold (24) from an environment (U) and is designed to be movable from a closed state for closing a fluid connection between the manifold (24) and the environment (U) to an open state for allowing the introduction of the liquid (W) purified in the upstream filter unit (4).

14. The base unit (20) according to claim 13, **characterized in that** at least two filter receptacles (30) are provided for detachably connecting and for disassembling again at least two filter cartridges (40).

15. Base unit (20) according to claim 13 or 14, **characterized in that** the automatic collector closure (32) is configured in such a manner that an opening force (O2), which is directed onto an outer side (33) of the automatic collector closure (32) facing the environment (U), and in particular in the direction of the manifold (24), moves the automatic collector closure (32) from the closed state to the open state, preferably **in that** the automatic collector closure (32) is configured in such a manner that a closing force (C2), which is directed onto an inner side (34) of the automatic collector closure (32) facing the manifold (24), and in particular in the direction of the environment (U), moves the automatic collector closure (32) from the open state to the closed state.

16. The base unit (20) according to any one of the preceding claims, **characterized in that** a spring (63) is arranged adjacent to the inner side (34) of the automatic collector closure (32) and at least partially exerts the closing force (C2) onto the inner side (34) of the automatic collector closure (32), and/or **in that** the purified liquid (W) located in the manifold (24) at least partially exerts the closing force (C2) onto the inner side (34) of the automatic collector closure (32).

17. The base unit (20) according to any one of the preceding claims, **characterized in that**, in the open state of the automatic collector closure (32), a flow channel (36) is formed between an outer side (33) of the automatic collector closure (32) facing the environment (U) and the base unit (20) in the region of the inlet opening (22), which flow channel (36) provides a fluid connection from the outside into the manifold (24).

18. The base unit (20) according to any one of the preceding claims, **characterized in that** the inlet opening (22) is assigned to a top side (21) of the base unit (20) and an opening plane (E2) is defined by the inlet opening (22), and **in that** the top side (21) has at least one recess (31), preferably formed circumferentially, wherein the recess (31) is designed to be set back with respect to the opening plane (E2) of the inlet opening (31) for receiving a filter cartridge (40) with at least one projection (49) corresponding to the recess (31).

19. The base unit (20) according to any one of the preceding claims, **characterized in that** the automatic collector closure (32) is designed to be changeable between the open state for allowing the introduction of the liquid (W) purified in the upstream filter unit (4) and the closed state for closing a fluid connection between the manifold (24) and the environment (U).

20. An oil-water-separating device (10) for removing oil-containing components from an oil-water mixture of a condensate originating from a compressed-air process, **characterized by** a base unit (20) according to any one of claims 13 to 19, wherein at least one filter unit (4) in the form of a filter cartridge (40, 40', 40") according to any one of the preceding claims is provided, wherein the filter cartridge (40, 40', 40") corresponds to the filter receptacle (30) in such a manner that, when the filter cartridge (40, 40', 40") is received in the filter receptacle (30), the automatic filter cartridge closure (50) and the automatic collector closure (32) abut against each other in such a manner that both the automatic filter cartridge closure (50) and the automatic collector closure (32) are thereby each moved to the open state.

21. The oil-water-separating device (10) according to claim 20, **characterized in that** a plurality of the filter cartridges (40, 40', 40") is provided, wherein the plurality of filter cartridges (40, 40', 40") is connected in parallel and the filter cartridges (40, 40', 40") with their outflow openings (48) each open into the manifold (24) as a common manifold of the oil-water-separating device (10), and this common manifold in turn opens into the riser (26) as a common riser of the oil-water-separating device (10).

## Revendications

1. Unité de filtrage (4), destinée à être intégrée dans un dispositif séparateur huile/eau (10), pour éliminer des éléments constitutifs huileux d'un mélange huile/eau sous la forme de condensats résultant d'un processus par air comprimé, l'unité de filtrage (4) comportant un carter (44) séparant un espace intérieur (42) de filtre d'un environnement (U), dans l'espace intérieur (42) de filtre étant placée une matière filtrante pour l'élimination au moins partielle d'huile hors du mélange huile/eau sous la forme d'un processus par air comprimé, de préférence une matière filtrante (43) par adsorption, pour l'adsorption d'huile dispersée, un orifice d'afflux (46) étant prévu pour mettre à disposition un afflux d'un liquide (L) qui doit être épuré dans l'espace intérieur (42) de filtre et le carter (44) comportant en aval de la matière filtrante un orifice d'évacuation (48) pour la mise à disposition d'une évacuation de liquide (W) épuré hors de l'espace intérieur (42) de filtre, **caractérisée en ce que** l'unité de filtrage (4) est conçue sous la forme d'une cartouche filtrante (40) prévue pour être raccordée de manière amovible sur le et à être redémontée du dispositif séparateur huile/eau (10), **en ce que** l'orifice d'évacuation (48) du carter (44) est configuré de manière à pouvoir se fermer au moyen d'une fermeture automatique (50) de cartouche filtrante, la fermeture automatique (50) de cartouche filtrante étant conçue de manière à pouvoir être amenée par l'insertion de la cartouche filtrante (40) dans un logement de filtre (30) correspondant d'une unité au sol (20) du dispositif séparateur huile/eau (10) d'une position fermée, destinée à empêcher l'évacuation de liquide (W) épuré hors de l'espace intérieur (42) de filtre dans une position ouverte, destinée à permettre l'évacuation de liquide (W) épuré hors de l'espace intérieur (42) de filtre, de sorte qu'aucune ouverture active de la fermeture de cartouche filtrante par un utilisateur ne soit nécessaire,
**en ce que** la fermeture automatique (50) de cartouche filtrante est configurée de telle sorte qu'une force de fermeture (C1), qui est dirigée vers une face intérieure (54) tournée vers l'espace intérieur (42) de filtre de la fermeture automatique (50) de cartouche filtrante amène la fermeture automatique (50) de cartouche filtrante de la position ouverte dans la position fermée,
et **en ce que** le liquide qui doit être épuré ou le liquide épuré se trouvant dans l'espace intérieur (42) de filtre exerce au moins partiellement la force de fermeture (C1) sur la face intérieure (54) de la fermeture automatique (50) de cartouche filtrante.

2. Unité de filtrage (4) selon la revendication 1, **caractérisée en ce que** la fermeture automatique (50) de cartouche filtrante est configurée de telle sorte qu'une force d'ouverture (O1), qui est dirigée vers une face extérieure (52) tournée vers l'environnement (U) de la fermeture automatique (50) de cartouche filtrante et notamment en direction de l'espace intérieur (42) de filtre, amène la fermeture automatique (50) de cartouche filtrante de la position fermée dans la position ouverte.

3. Unité de filtrage (4) selon la revendication 1 ou 2, **caractérisée en ce qu'**une surface de butée (53) de la cartouche filtrante est prévue pour s'appuyer contre un composant placé en aval du dispositif séparateur huile/eau (10) pendant le fonctionnement du dispositif séparateur huile/eau (10), de préférence **en ce que** la surface de butée (53) de la cartouche filtrante est déportée vers l'arrière par rapport à un plan (E3) de face inférieure de la cartouche filtrante (40), de préférence par ailleurs qu'un plan d'ouverture (E1) défini par l'orifice d'évacuation (48) soit déporté vers l'arrière par rapport à la surface de butée (53) de la cartouche filtrante.

4. Unité de filtrage (4) selon l'une quelconque des revendications précédentes, **caractérisée en ce que** la surface de butée (53) de la cartouche filtrante est conçue sur une face extérieure (52) de la fermeture automatique (50) de cartouche filtrante qui est tournée vers l'environnement (U).

5. Unité de filtrage (4) selon l'une quelconque des revendications précédentes, **caractérisée en ce que** la fermeture automatique (50) de cartouche filtrante est conçue pour pouvoir changer entre la position ouverte, pour permettre l'évacuation de liquide (W) épuré hors de l'espace intérieur (42) de filtre et la position fermée, pour empêcher l'évacuation de liquide (W) épuré hors de l'espace intérieur (42) de filtre.

6. Unité de filtrage (4) selon l'une quelconque des revendications précédentes, **caractérisée en ce que** la force de fermeture (CI) est dirigée vers la face intérieure (54) de la fermeture automatique (50) de cartouche filtrante qui est tournée vers l'espace intérieur (42) de filtre et en direction de l'environnement (U).

7. Unité de filtrage (4) selon l'une quelconque des revendications précédentes, **caractérisée en ce qu'**un ressort (60) est placé en se raccordant sur la face intérieure (54) de la fermeture automatique (50) de cartouche filtrante et exerce au moins partiellement la force de fermeture (CI) sur la face intérieure (54) de la fermeture automatique (50) de cartouche filtrante.

8. Unité de filtrage (4) selon l'une quelconque des revendications précédentes, **caractérisée en ce que**, dans la position ouverte de la fermeture automatique (50) de cartouche filtrante, un canal de passage (58) est créé entre une face extérieure (52) de la fermeture automatique (50) de cartouche filtrante tournée vers l'environnement (U) et le carter (44), dans la zone de l'orifice d'évacuation (48), le canal de passage (48) mettant à disposition une liaison fluidique de l'espace intérieur (42) de filtre vers l'extérieur.

9. Unité de filtrage (4) selon l'une quelconque des revendications précédentes, **caractérisée en ce que**, dans la position fermée de la fermeture automatique (50) de cartouche filtrante, l'orifice d'évacuation (48) et notamment le canal de passage (58) créé dans la position ouverte de la fermeture automatique (50) de cartouche filtrante est fermé de telle sorte que dans une zone extérieure, une face extérieure (52) tournée vers l'environnement (U) de la fermeture automatique (50) de cartouche filtrante soit en liaison active assurant l'étanchéité avec la surface intérieure dirigée vers l'espace intérieur (42) de filtre du carter (44).

10. Unité de filtrage (4) selon l'une quelconque des revendications précédentes, **caractérisée en ce que** l'orifice d'afflux (46) est associé à une face supérieure (45) de la cartouche filtrante (40) et l'orifice d'évacuation (48) est associé à une face inférieure (47) de la cartouche filtrante (40) et **en ce qu'**il est prévu un canal d'afflux (41), le canal d'afflux (41) étant placé au-dessus de l'orifice d'afflux (46) et se trouvant en liaison fluidique avec l'orifice d'afflux (46) et le canal d'afflux (41) comportant par ailleurs une dérivation (41'), destinée à retransférer une partie du liquide (L) qui doit être épuré dans une cartouche filtrante (40', 40") voisine.

11. Unité de filtrage (4) selon l'une quelconque des revendications précédentes, **caractérisée en ce que** le canal d'afflux (41) comporte un orifice d'entrée (46'), destiné à la pénétration initiale du liquide (L) qui doit être épuré dans la cartouche filtrante (40) et un orifice de dérivation (48'), destiné au retransfert d'une partie du liquide (L) qui doit être épuré hors de la cartouche filtrante (40) dans une cartouche filtrante (40', 40") voisine, l'orifice de dérivation (48') étant conçu de manière à pouvoir changer entre une position ouverte et une position fermée, de préférence **en ce que** l'orifice de dérivation (48') est conçu pour être relié de manière étanche au fluide avec un orifice d'entrée (46") d'une cartouche filtrante (40', 40") voisine.

12. Unité de filtrage (4) selon l'une quelconque des revendications précédentes, **caractérisée en ce que** l'orifice d'évacuation (48) est associé à une face inférieure (47) de la cartouche filtrante (40) et **en ce qu'**un plan d'ouverture (E1) est défini par l'orifice d'évacuation (48) et **en ce que** le carter (44) comporte sur la face inférieure (47) au moins une saillie (49), conçue de préférence sous la forme d'un bord périphérique par rapport au plan d'ouverture (E1) de l'orifice d'évacuation (48), pour le positionnement de la cartouche filtrante (40) dans un logement de filtre (30) du dispositif séparateur huile/eau (10) correspondant à la saillie (49).

13. Unité au sol (20) d'un dispositif séparateur huile/eau (10), destiné à éliminer des éléments constitutifs huileux d'un mélange huile/eau sous la forme de condensats résultant d'un processus par air comprimé, du côté entrée étant prévu au moins un orifice d'entrée (22) pour introduire du liquide (W) épuré dans une unité de filtrage (4) selon l'une quelconque des revendications 1 à 12 montée en amont, une conduite collectrice (24) étant prévue, pour retransférer le liquide (W) épuré, l'orifice d'entrée (22) mettant à disposition une arrivée pour le liquide (W) épuré dans la conduite collectrice (24) et une colonne montante (26) étant prévue, la colonne montante (26) se trouvant en liaison fluidique avec la conduite collectrice (24) et étant configurée pour évacuer le liquide (W) épuré par l'intermédiaire d'un orifice de sortie (28) prévu en aval, **caractérisée en ce qu'**il est prévu au moins un logement de filtre (30), le logement de filtre (30) étant configuré pour être raccordé de manière amovible sur et redémonté de l'unité de filtrage (4) montée en amont sous la forme d'une cartouche filtrante (40) et **en ce que** l'orifice d'entrée (22) est placé dans la zone du logement de filtre (30) et est configuré de manière à pouvoir se fermer au moyen d'une fermeture automatique (32) de collecteur, la fermeture automatique (32) de collecteur séparant la conduite collectrice (24) d'un environnement (U) et étant conçue pour pouvoir être amenée d'une position fermée, pour fermer une liaison fluidique entre la conduite collectrice (24) et l'environnement (U) dans une position ouverte, pour permettre l'introduction du liquide (W) épuré dans l'unité de filtrage (4) montée en amont.

14. Unité au sol (20) selon la revendication 13, **caractérisée en ce qu'**au moins deux logements de filtre (30) destinés au raccordement amovible et au redémontage d'au moins deux cartouches filtrantes (40) sont prévus.

15. Unité au sol (20) selon la revendication 13 ou 14, **caractérisée en ce que** la fermeture automatique (32) de collecteur est configurée de telle sorte qu'une force d'ouverture (O2), qui est dirigée vers une face extérieure (33) tournée vers l'environnement (U) de la fermeture automatique (32) de collecteur et notamment en direction de la conduite collectrice (24), amène la fermeture automatique (32) de collecteur de la position fermée dans la position ouverte, de préférence, **en ce que** la fermeture automatique (32) de collecteur est configurée de telle sorte qu'une force de fermeture (C2) qui est dirigée sur une face intérieure (34) tournée vers la conduite collectrice (24) de la fermeture automatique (32) de collecteur et notamment en direction de l'environnement (U), amène la fermeture automatique (32) de collecteur de la position ouverte dans la position fermée.

16. Unité au sol (20) selon l'une quelconque des revendications précédentes, **caractérisée en ce qu'**un ressort (63) est placé en se raccordant sur la face intérieure (34) de la fermeture automatique (32) de collecteur et exerce au moins partiellement la force de fermeture (C2) sur la face intérieure (34) de la fermeture automatique (32) de collecteur et/ou **en ce que** le liquide (W) épuré se trouvant dans la conduite collectrice (24) exerce au moins partiellement la force de fermeture (C2) sur la face intérieure (34) de la fermeture automatique (32) de collecteur.

17. Unité au sol (20) selon l'une quelconque des revendications précédentes, **caractérisée en ce que**, dans la position ouverte de la fermeture automatique (32) de collecteur, un canal de passage (36) est créé entre une face extérieure (33) tournée vers l'environnement (U) de la fermeture automatique (32) de collecteur et l'unité au sol (20) dans la zone de l'orifice d'entrée (22), lequel canal de passage (36) met à disposition une liaison fluidique de l'extérieur dans la conduite collectrice (24).

18. Unité au sol (20) selon l'une quelconque des revendications précédentes, **caractérisée en ce que** l'orifice d'entrée (22) est associé à une face supérieure (21) de l'unité au sol (20) et **en ce qu'**un plan d'ouverture (E2) est défini par l'orifice d'entrée (22) et **en ce que** la face supérieure (21) comporte au moins un évidement (31), conçu de préférence sous forme périphérique, pour recevoir une cartouche filtrante (40), l'évidement (31) étant conçu en étant déporté vers l'arrière par rapport au plan d'ouverture (E2) de l'orifice d'entrée (31) par au moins une saillie (49) correspondant à l'évidement (31).

19. Unité au sol (20) selon l'une quelconque des revendications précédentes, **caractérisée en ce que** la fermeture automatique (32) de collecteur est conçue de manière à pouvoir changer entre la position ouverte, pour permettre l'introduction du liquide (W) épuré dans l'unité de filtrage (4) montée en amont et la position fermée, pour fermer une liaison fluidique entre la conduite collectrice (24) et l'environnement (U).

20. Dispositif séparateur huile/eau (10), destiné à éliminer des éléments constitutifs huileux d'un mélange huile/eau sous la forme de condensats résultant d'un processus par air comprimé, **caractérisé par** une unité au sol (20) selon l'une quelconque des revendications 13 à 19, au moins une unité de filtrage (4) étant prévue sous la forme d'une cartouche filtrante (40, 40', 40") selon l'une quelconque des revendications précédentes, la cartouche filtrante (40, 40', 40") correspondant avec le logement de filtre (30) de telle sorte, que lorsque la cartouche filtrante (40, 40', 40") est reçue dans le logement de filtre (30), la fermeture automatique (50) de cartouche filtrante et la fermeture automatique (32) de collecteur s'aboutent de manière à ce que de ce fait, aussi bien la fermeture automatique (50) de cartouche filtrante qu'également la fermeture automatique (32) de collecteur soient amenées chacune dans la position ouverte.

21. Dispositif séparateur huile/eau (10) selon la revendication 20, **caractérisée en ce qu'**il est prévu une pluralité de cartouches filtrantes (40, 40', 40"), la pluralité de cartouches filtrantes (40, 40', 40") étant montée en parallèle et les cartouches filtrantes (40, 40', 40") débouchant par leurs orifices d'évacuation (48) chacune dans la conduite collectrice (24) sous la forme d'une conduite collectrice commune du dispositif séparateur huile/eau (10) et ladite conduite collectrice commune débouchant à son tour dans la colonne montante (26) sous la forme d'une colonne montante commune du dispositif séparateur huile/eau (10).
